# EUROPÄISCHE PATENTANMELDUNG

(11) **EP 4 414 075 A2**
(43) Veröffentlichungstag der Anmeldung: **14.08.2024**
(21) Anmeldenummer: 24152833.0
(22) Anmeldetag: 19.01.2024
(51) Int. Cl.: B01L 3/00

(54) **ZENTRIFUGIERBARER PROBENTRÄGER**

(30) Priorität: 20.01.2023 DE 102023101481
(71) Anmelder: Testo bioAnalytics GmbH, 79822 Titisee-Neustadt (DE)
(72) Erfinder: RIEMER, Joel, 79874 Breitnau (DE); RIEGER, Robert, 79117 Freiburg (DE); MÜNZER, Markus, 79856 Hinterzarten (DE); PFEIFER, Linda, 78056 Villingen-Schwenningen (DE)
(74) Vertreter: Mertzlufft-Paufler, Cornelius

(57) **Zusammenfassung**

Somit schlägt die Erfindung vorzugsweise einen zentrifugierbaren Probenträger (1) mit einem Fluidiksystem (2) vor, wobei das Fluidiksystem wenigstens eine Kammer (3, 20, 21, 32, 44, 45, 46, 63) aufweist, die wenigstens eine Zulauföffnung 4 hat, wobei die Kammer (3, 20, 21, 32, 44, 45, 46, 63) wenigstens zwei voneinander beabstandete Entlüftungsöffnungen (6, 7) hat und wobei die Entlüftungsöffnungen (6, 7) so zueinander angeordnet sind, dass eine Verbindungslinie zwischen den Entlüftungsöffnungen (6, 7) nicht durch die Kammer (3, 20, 21, 32, 44, 45, 46, 63) verläuft. Ein derartiger erfindungsgemäßer Probenträger (1) ist besonders geeignet zur Verwendung bei Analyseverfahren zum Nachweis von Mikroorganismen, ist jedoch nicht auf diese Verwendung beschränkt

## Beschreibung

Die Erfindung betrifft einen zentrifugierbaren Probenträger mit einem Fluidiksystem, das wenigstens eine Kammer aufweist, wobei die Kammer wenigstens eine Zulauföffnung hat.

Zentrifugierbare Probenträger mit einem Fluidiksystem sind aus dem Stand der Technik bekannt und werden häufig als "Lab-on-a-chip"-System bezeichnet, da sie zur Identifizierung und Analyse von Mikropartikeln auf minimalstem Raum verwendet werden. Derartige "Lab-on-a-chip"-Systeme finden in der Lebensmittelindustrie, der Medizin und der pharmazeutischen Produktion Anwendung.

Nachteilig an Fluidiksystemen, insbesondere Mikrofluidiksystemen, ist ihr komplexes Netzwerk aus beispielsweise Fluidikkanälen, Pumpen und Ventilen, welche für ein Analyseverfahren benötigt werden. Hierdurch sind Produktionskosten, insbesondere in der Massenherstellung, relativ hoch. Ferner kann eine komplexe Ausgestaltung eines Mikrofluidiksystems eines "Lab-on-a-chip"-Systems zu Fehlerquellen bei Analysen führen, welche reproduzierbare Ergebnisse erschweren. So können unter anderem Kapillarkräfte und Oberflächenbeschaffenheiten eines Mikrofluidiksystems einen beachtlichen Einfluss auf Messergebnisse haben.

Die Verwendung von Fluidiksystemen, insbesondere von Mikrofluidiksystemen, zur Zentrifugation, bedarf weiterer, teils noch komplexerer und kostenintensiverer Anforderungen an das Material und an die Ausgestaltung des Fluidiksystems. Dies ist besonders nachteilig in der Massendiagnostik, insbesondere in den eingangs genannten Industriezweigen.

Es ist daher Aufgabe der Erfindung, zentrifugierbare Probenträger mit einem Fluidiksystem zu verbessern.

Zur Lösung der genannten Aufgabe sind erfindungsgemäß die Merkmale des Anspruchs 1 vorgesehen. Insbesondere wird somit zur Lösung der genannten Aufgabe bei zentrifugierbaren Probenträgern der eingangs beschriebenen Art erfindungsgemäß vorgeschlagen, dass die Kammer wenigstens zwei voneinander beabstandete Entlüftungsöffnungen hat und dass die Entlüftungsöffnungen so zueinander angeordnet sind, dass eine Verbindungslinie zwischen den Entlüftungsöffnungen nicht durch die Kammer verläuft. Hierdurch kann erfindungsgemäß eine Kammer optimal entlüftet werden, wodurch ein Druck in der Kammer konstant gehalten oder angepasst werden kann. Ein konstanter und/oder anpassbarer Kammerdruck kann insbesondere wichtig sein bei empfindlichen Umweltproben und/oder Chemikalien zur Untersuchung besagter Umweltproben. Hierdurch können zentrifugierbare Probenträger mit einem Fluidiksystem verbessert werden. Durch die Verwendung zweier Entlüftungsöffnungen kann die Entlüftung beispielsweise unabhängig von einer Ausrichtung der Kammer relativ zu einer momentanen Richtung einer Zentrifugalkraft ausgeführt werden.

Je nach Ausbildung und Verwendung des Probenträgers können auch mehr als zwei Entlüftungsöffnungen vorgesehen sein, die voneinander beabstandet sind. Somit kann eine besonders optimale Belüftung einer Kammer ausgestaltet sein.

Die wenigstens zwei Entlüftungsöffnungen sind bei einem erfindungsgemäßen zentrifugierbaren Probenträger voneinander beabstandet. Somit kann Luft oder ein anderes in der Kammer befindliches Gas vorteilhaft von zwei beabstandeten Entlüftungsöffnungen entweichen, wodurch eine Entlüftung besonders gut, beispielsweise unabhängig von einer Ausrichtung des Probenträgers innerhalb einer Zentrifuge, realisierbar sein kann. Eine derart flexible Entlüftung ist besonders vorteilhaft.

Dabei sind die wenigstens zwei Entlüftungsöffnungen so angeordnet, dass eine zwischen den Entlüftungslinien befindliche Verbindungslinie nicht durch die Kammer verläuft. Hierdurch können die wenigstens zwei Entlüftungsöffnungen an einer ebenen oder konvexen Struktur, beispielsweise einer Wand, ausgebildet sein, was die Fertigung der Kammer und somit des Fluidiksystems vereinfacht. Ferner kann ein Gas in eine Richtung durch die beiden Entlüftungsöffnungen entweichen, wodurch Verwirbelungen in der Kammer vermindert bzw. vermieden werden können, was von Vorteil ist. Die Ausbildung einer ebenen oder konvexen Struktur kann auch vorteilhaft sein, um eine Ausbildung von stehenden Luftblasen zwischen den Entlüftungsöffnungen für den Fall, dass eine momentane Richtung einer Zentrifugalkraft aus der Kammer zwischen den Entlüftungsöffnungen hindurch verläuft, zu vermeiden.

Jeder Kammertyp eines erfindungsgemäßen zentrifugierbaren Probenträgers kann wie soeben beschrieben oder nachfolgend beansprucht ausgebildet sein. So kann beispielsweise eine Dosierkammer, eine Vorratskammer oder Kammern einer Anordnung wie soeben beschrieben oder nachfolgend beansprucht ausgebildet sein.

Bei einer vorteilhaften Ausgestaltung kann vorgesehen sein, dass die Kammer einen Boden hat, in dem eine Vertiefung ausgebildet ist. Hierbei kann die Vertiefung beispielsweise als Tasche oder napfförmig ausgebildet sein. Flüssigkeit, welche in die Kammer eingetragen wird, kann vorteilhaft in der Vertiefung gehalten werden. Hierdurch kann eine Flüssigkeit, beispielsweise eine zu untersuchende Umweltprobe oder eine Ausgleichssubstanz, besser kontrolliert werden. Ferner können Verarbeitungsschritte in der Vertiefung im Zuge eines Analyseverfahrens vorgenommen werden. Eine Vertiefung ist auch ein geeignetes Mittel, um Substanzen für eine Benetzung mit der eingetragenen Flüssigkeit bereitzuhalten, beispielsweise in getrockneter Form.

Die Vertiefung kann zumindest teilweise durch eine Wandung der Kammer ausgebildet sein, sodass die Vertiefung sehr nahe an der Wand ausgebildet sein kann. Somit kann eine Flüssigkeit besonders nahe an einer Wandung der Kammer gehalten werden, was insbesondere während einer Zentrifugation des Probenträgers vorteilhaft ist.

Bei einer vorteilhaften Ausgestaltung kann vorgesehen sein, dass eine Wand der Kammer einen in die Kammer abragenden Vorsprung ausbildet, dass an den Vorsprung eine Ablaufkante ausgebildet ist und dass die Zulauföffnung zwischen einer Abtropfkante und einem Auftreffpunkt eines durch die Ablaufkante definierten Gießstrahl angeordnet ist. Durch einen abragenden Vorsprung kann eine Flüssigkeit langsam von einer Zulauföffnung in die Kammer transportiert werden, wodurch Bestandteile der Flüssigkeit geschützt werden können. Durch die Ablaufkante des Vorsprungs kann die Flüssigkeit sicher geführt werden, was von Vorteil ist.

Bei einer vorteilhaften Ausgestaltung kann vorgesehen sein, dass der Probenträger einen Grundkörper aufweist, an dem das Fluidiksystem nach einer Seite offen ausgebildet ist, insbesondere wobei der Grundkörper wenigstens einen Befestigungsflügel aufweist. Hierdurch kann das Fluidiksystem direkt eine Umweltprobe zugeführt werden. Somit muss das Fluidiksystem nicht zusätzlich zur Probenannahme aus dem zentrifugierbaren Probenträger entnommen werden, wodurch die Analyse der Umweltprobe schneller und sicherer durchgeführt werden kann. Somit kann das Arbeiten mit zentrifugierbaren Probenträgern verbessert werden. Eine solche Anordnung erlaubt auch eine einfache Herstellung im Spritzgussverfahren, da allseits geschlossene oder nur durch eine enge Öffnung zugängliche Kavitäten vermeidbar sind. Die Erfindung hat hier erkannt, dass sich die Kavitäten oder Kammern sowie die Kanäle durch eine Abdeckung abschließen lassen.

Dabei kann die offene Seite des Fluidiksystems so ausgebildet sein, dass die Öffnung des Fluidiksystems formschlüssig an ein Probenentnahmegerät, insbesondere an dem die Probe enthaltenen Bereich, angepasst ist. Hierdurch kann eine Probeübergabe optimal ausführbar sein. Insbesondere von Vorteil kann sein, dass der die Probe enthaltene Bereich selbst während der Zentrifugation und/oder Analyse der Probe in der Öffnung verbleiben kann. So kann beispielsweise die offen ausgebildete Seite zumindest während der Zentrifugation und/oder Analyse von Mikropartikeln verschließbar sein.

Ferner kann der Probenträger an einen Probenhalter, vorzugsweise einer Zentrifuge, durch den wenigstens einen Befestigungsflügel passgenau eingesetzt und/oder fixiert werden, wodurch der Probenträger sicher zentrifugiert werden kann. Dies stellt eine bevorzugte Verwendung der beschriebenen Erfindung dar. Der wenigstens eine Befestigungsflügel kann vorteilhaft ein Kippen des Probenträgers und einen damit einhergehenden Flüssigkeitsaustritt aus dem Probenträger verhindern, sodass vorteilhaft weitere Elemente des Probenträgers, die Zentrifuge oder andere Bauteile einer Analysevorrichtung geschützt werden können. Somit kann das Arbeiten mit zentrifugierbaren Probenträgern noch weiter verbessert werden. Fehlbedienungen, beispielsweise in Form einer unterlassenen Arretierung des Probenträgers, sind so vermeidbar.

Der Befestigungsflügel ist vorzugsweise verformbar ausgebildet, sodass beispielsweise ein Einrasten (und späteres Lösen) des Probenträgers an einer korrespondierenden Halterung der Zentrifuge ermöglicht werden kann, wodurch eine Handhabung des Probenträgers besonders nutzerfreundlich sein kann. Besonders benutzerfreundlich ist ein Probenträger, der wenigstens zwei Befestigungsflügel hat, da dadurch beispielsweise ein Einrasten noch sicherer durchführbar sein kann.

Bei einer vorteilhaften Ausgestaltung kann vorgesehen sein, dass das Fluidiksystem wenigstens eine Anordnung von Kammern aufweist, wobei jede Kammer der wenigstens einen Anordnung zu wenigstens zwei weiteren Kammern der wenigstens einen Anordnung benachbart ist. Durch eine derartige Anordnung können verschiedene Verarbeitungsschritte zur Analyse einer Umweltrobe separiert voneinander vorgenommen werden, wodurch eine Analyse noch genauer und/oder komplexer ausgestaltet sein kann. Somit sind mehrstufige Verfahren möglich, was ein besonders verbessertes Arbeiten mit zentrifugierbaren Probenträgern ermöglicht. Insbesondere ist es so möglich, serielle Anordnungen und/oder verzweigte Topologien von Kammern zu schaffen.

Da bei einer vorteilhaften Anordnung vorgesehen sein kann, dass jede Kammer der wenigstens einen Anordnung mit wenigstens zwei weiteren Kammern der Anordnung benachbart ist, kann die Anordnung platzsparend ausgebildet sein. Hierdurch kann/können das Fluidiksystem und/oder der zentrifugierbare Probenträger relativ klein ausgebildet sein, was einen Probenträger verbessert.

Bei einer vorteilhaften Ausgestaltung kann vorgesehen sein, dass der Probenträger zwei Seiten aufweist, die durch einen umlaufenden Rand getrennt sind, wobei das Fluidiksystem einen Verbindungskanal umfasst, der die zwei Seiten verbindet und wobei der wenigstens eine Verbindungskanal an seinen Enden in jeweils einen längs einer der zwei Seiten verlaufenden Fluidikkanäle übergeht. Somit kann ein Probenträger ausgebildet sein, dessen Mikrofluidiksystem eine Flüssigkeit in drei Dimensionen transportieren kann. Ein derartiger zentrifugierbarer Probenträger ist insbesondere verbessert, da mehr Reaktionsraum des Probenträgers zur Analyse geschaffen sein kann, der komplexe und schrittreiche Analyseverfahren ermöglicht. So kann beispielsweise ein Analysebereich, vorzugsweise eine Membran, auf einer anderen Seite des Probenträgers ausgebildet sein, als eine Vorbereitungskammer, wobei ein zu dem Analysebereich führender Fluidikkanal und die Vorbereitungskammer durch einen Verbindungskanal verbunden sind. Somit kann ein zentrifugierbarer Probenträger besonders variabel ausgebildet sein.

Ferner kann sich auf einer Seite des Fluidiksystems auch wenigstens ein Abfluss für überschüssige Flüssigkeiten befinden. Auf der anderen Seite des Fluidiksystems kann sich beispielsweise ein Analysebereich und eine Vorbereitungskammer sowie die Zulauföffnung befinden. Da die beiden Seiten des Fluidiksystems über den wenigstens einen Verbindungskanal miteinander verbunden sind, kann somit eine optimale Abfuhr überschüssiger Flüssigkeit ermöglicht werden, wodurch vorteilhaft ein Rücklauf von Flüssigkeit beispielsweise in den Analysebereich verhindert werden kann.

Der umlaufende Rand kann durch den scheibenförmigen Probenträger und/oder durch das Fluidiksystem ausgebildet sein, wodurch der umlaufende Rand kostengünstig und zeitsparend mit dem Probenträger und/oder dem Fluidiksystem hergestellt wird. So kann beispielsweise ein Probenträger, der zwei Seiten aufweist, einteilig hergestellt werden. Dadurch kann ein Probenträger stabiler ausgebildet sein, was besonders wichtig ist, wenn der Probenträgers zentrifugiert wird.

Allgemein kann die Scheibenform des Probenträgers eine runde, ovale oder (viel)eckige, eine geradlinig oder krummlinig begrenzte Kontur haben.

Bei einer vorteilhaften Ausgestaltung kann vorgesehen sein, dass das Fluidiksystem wenigstens eine Dosierkammer und eine Vorratskammer aufweist, wobei eine Verbindungslinie zwischen einer Einlauföffnung der Vorratskammer und einer Auslauföffnung der Dosierkammer durch die Vorratskammer verläuft. Durch eine Dosierkammer, welche der Vorratskammer nachgeschaltet ist, kann das Fluidiksystem vorteilhaft mit Ausgleichssubstanzen, wie beispielsweise Pufferlösungen oder Wasser, befüllt bzw. gespült werden.

Ferner kann durch eine Dosierkammer wiederholbar ein gleiches Volumen einer Ausgleichssubstanz freigesetzt werden. Somit können jedem Bereich, insbesondere jeder Kammer, dem Fluidiksystem ein gleiches Volumen einer Ausgleichssubstanz zugeführt werden, wodurch vorteilhaft Reaktionsbedingungen einer oder mehrerer Kammern besser kontrolliert werden können. Hierdurch kann ein Arbeiten mit einem Probenträger besonders verbessert werden, insbesondere auch dann, wenn das Fluidiksystem eine wie zuvor beschriebene oder nachfolgend beanspruchte Anordnung von Kammern aufweist, in welcher mehrstufige Verfahren realisiert werden können.

Die Vorratskammer ermöglicht vorteilhaft, dass eine Ausgleichssubstanz der Dosierkammer vorgelagert wird.

Durch die erfindungsgemäße Ausgestaltung, wobei eine Verbindungslinie zwischen einer Einlauföffnung der Vorratskammer und einer Auslauföffnung der Dosierkammer durch die Vorratskammer verläuft, ist insbesondere bei einem zentrifugierbaren Fluidiksystem, ein gezieltes Dosieren einer Kammer des Fluidiksystems möglich. So kann die Vorratskammer über ihre Einlauföffnung eine Ausgleichssubstanz vorzugsweise dann erhalten, wenn der Probenträger um eine Rotationsachse bewegt wird. Ebenso kann die Dosierkammer auch infolge einer gezielten Rotationsbewegung die Ausgleichssubstanz in eine Kammer freisetzten. Generell können Dosierkammer (und deren Auslauföffnung) und Vorratskammer (und deren Zulauföffnung) so angeordnet sein, dass eine Dosierung einer Kammer mit einer Ausgleichssubstanz entweder bei einer Rotation des Probenträgers im Uhrzeigersinn oder gegen den Uhrzeigersinn vollzogen werden kann. Somit kann eine aktive Dosierung einer Kammer ohne Ventile oder andere komplexe, bewegliche Bauteile auskommen, wodurch Kosten und komplexe Ausgestaltungen des Fluidiksystems eingespart werden können. Ferner kann eine Freisetzung einer Ausgleichssubstanz wiederholt vollzogen werden, was von Vorteil ist.

Bei einer vorteilhaften Ausgestaltung kann vorgesehen sein, dass das Fluidiksystem einen Messbereich aufweist, wobei der Messbereich mit einem entfernbaren Abdeckelement verschlossen ist. Hierdurch kann der Messbereich abgedeckt und abgedichtet sein, was während der Zentrifugation und/oder der Analyse einer Umweltprobe vorteilhaft ist. Auch aus hygienischen bzw. sicherheitstechnischen Aspekten ist eine dichte Abdeckung wichtig.

Unter einem entfernbaren Abdeckelement kann ein Abdeckelement gemeint sein, das zumindest während einer Aufzeichnung einer Umweltprobe dauerhaft aus dem Messbereich entfernbar ist. Vorteilhaft bei einem entfernbaren Abdeckelement kann sein, dass bei einer Überführung eines Fluids in den Messbereich das Fluidiksystem durch das Abdeckelement abgeschlossen und abgedichtet sein kann. Zusätzlich kann durch ein entfernbares Abdeckelement eine Aufzeichnung einer Umweltprobe dahingehend verbessert werden, dass das Abdeckelement nicht störend zwischen beispielsweise Mikropartikeln der Umweltprobe und einem Detektor positioniert ist.

Das entfernbare Abdeckelement ist vorzugsweise so ausgebildet, dass Vorrichtungen, beispielsweise ein Detektor, durch das Entfernen des Abdeckelements zur Öffnung des Messbereichs nicht beeinträchtigt werden, was vorteilhaft ist. So kann ein Messbereich mit einem transparenten Abdeckelement beispielsweise für die Detektion von in dem Mikrofluidiksystem befindlichen, fluoreszierenden Mikropartikeln verwendet werden. Generell kann ein Messbereich so beschaffen sein, dass insbesondere optische Aufnahmen der in dem Fluidiksystem befindlichen Umweltprobe durchführbar sind.

Der Messbereich kann der hierin beschriebene Analysebereich sein. So kann sich der Messbereich vorteilhaft in einer wie nachfolgende beschriebenen Messkammer befinden, welche eine vorzugsweise wie hierin beschrieben Membran umfasst. Die wenigstens eine Zulauföffnung kann durch den zuvor beschriebenen Verbindungskanal ausgebildet werden, wodurch vorteilhaft eine Verbindung zu der hierin beschriebenen Vorbereitungskammer oder einer anderen Kammer realisiert werden kann, was besonders vorteilhaft ist, wenn sich Messkammer und Vorbereitungskammer/ Kammer auf unterschiedlichen Seiten des Probenträgers befinden.

Bei einer vorteilhaften Ausgestaltung kann vorgesehen sein, dass sich der Messbereich in einer Messkammer befindet. Somit kann der Messbereich vorteilhaft mit einer zu untersuchenden Probenflüssigkeit und/oder Ausgleichssubstanz gespeist werden. Die Messkammer ist dabei vorteilhaft so ausgebildet, dass eine Probenflüssigkeit bzw. eine Ausgleichssubstanz optimal zur Analyse aufbereitet oder aufbereitbar ist.

Alternativ oder zusätzlich ist der Messbereich mit wenigstens zwei Abfallkammern verbunden. Der Messbereich und die zwei Abfallkammern sind dabei so in dem Fluidiksystem angeordnet, dass während der Zentrifugation und Schwenkung des zentrifugierbaren Probenträgers die Flüssigkeit aus dem Messbereich abfließt, sodass keine Flüssigkeit im Messbereich, insbesondere auf der bereits beschriebenen Membran, zurückbleibt. Somit kann der Messbereich sequenziell mit mehreren, vorzugsweise unterschiedlichen Flüssigkeiten gespeist werden, ohne dass eine Vermischung der Flüssigkeiten im Messbereich stattfindet. Ferner kann ein Rückstau im Messbereich und/oder in der Messkammer verhindert werden. Somit können insbesondere Analysen bzw. Messungen von Proben verbessert werden.

So kann insbesondere vorgesehen sein, dass der zu der ersten Abfallkammer der wenigstens zwei Abfallkammern führende Überlaufkanal an einer Seite des Messbereichs mündet als der Überlaufkanal der zweiten Abfallkammer der wenigstens zwei Abfallkammern. Diese beide Überlaufkanäle sind ferner, insbesondere ausgehend von dem Messbereich, in einem Winkel geführt, welcher insbesondere wenigstens 90° beträgt. Insbesondere ist vorgesehen, dass die beiden Überlaufkanäle in einem Winkel geführt werden, sodass sie nach einem Schwenken des Probenträgers eine Neigung aufweisen, sodass die Flüssigkeit von der oder einer Kammer über den Messbereich zu nur einer der Abfallkammern transportiert wird. Somit kann verhindert werden, dass Flüssigkeit in dem Messbereich verbleibt, da Flüssigkeit aus dem Messbereich in zumindest eine der beiden Abfallkammern abfließen kann, während der Probenträger zentrifugiert und geschwenkt wird.

Alternativ oder zusätzlich ist der Messbereich mit wenigstens zwei Abfallkammern verbunden. Somit kann, unabhängig von einer Ausrichtung des Probenträgers, Flüssigkeit aus dem Messbereich abgeführt werden. Dabei kann insbesondere eine der wenigstens zwei Abfallkammern, insbesondere in einer Verarbeitungsrichtung, vor dem oder einem Messbereich angeschlossen sein. Somit kann der Probenträger platzsparend ausgebildet werden.

Alternativ oder zusätzlich ist eine der wenigstens zwei Abfallkammern, insbesondere in einer Verarbeitungsrichtung, hinter dem oder einem Messbereich angeschlossen. Somit kann der Probenträger platzsparend ausgebildet werden.

Ist eine der zwei Abfallkammern vor dem Messbereich und die zweite der zwei Abfallkammern hinter dem Messbereich ausgebildet, kann, unabhängig von der Ausrichtung des Probenträgers, sichergestellt sein, dass keine Flüssigkeit in dem Probenträger zurückbleibt.

Als Verarbeitungsrichtung kann insbesondere eine Richtung einer Zentrifugalkraft gemeint sein.

Bei einer vorteilhaften Ausgestaltung kann vorgesehen sein, dass die Messkammer mit dem Probenträger lösbar verbindbar ist. Dabei kann die Messkammer als separates Bauteil beispielsweise über einen Klickverschluss oder einen Einsteckverschluss mit dem Probenträger lösbar verbindbar sein. Dies bietet den Vorteil, dass die Messkammer unabhängig von dem Probenträger entsorgt und/oder aufgehoben werden kann. Auch bietet dies die Möglichkeit, dass bei Bedarf nachträglich weitere Analysen der in der Messkammer enthaltenen Probe vorgenommen werden können. Zudem kann so auch eine für die jeweilige Analyse besonders geeignete Messkammer an den Probenträger angeschlossen werden. Dies bietet eine größere Flexibilität beim Einsatz des Probenträgers.

Bei einer vorteilhaften Ausgestaltung kann vorgesehen sein, dass zwischen wenigstens einer der wenigstens zwei Abfallkammern in fluidischer Verbindung eine Pufferkammer angeordnet ist. Somit kann das Fluidiksystem leicht gegen die Zentrifugalkraft geschwenkt werden, während durch den Messbereich bzw. die Messkammer Flüssigkeit strömt. Dadurch kommt es zu einem Flüssigkeitsstrom zwischen einer Kammer, welche Flüssigkeit in den Messbereich bzw. die Messkammer überführt, und der Pufferkammer. Dieser als Querstrom bezeichnete Flüssigkeitsstrom kann vorteilhaft zu einer Querstromfiltration genutzt werden. Durch den Querstrom kann eine Verstopfung der Membran bzw. des Messbereichs verlangsamt oder gar verhindert werden. Ferner kann der Querstrom insbesondere dazu genutzt werden, Reaktionen auf der Membran zu beschleunigen, sodass Analysen von Proben verbessert werden können.

Bei einer vorteilhaften Ausgestaltung kann vorgesehen sein, dass wenigstens eine der Entlüftungsöffnungen in einen Entlüftungskanal übergeht, der in seinem Verlauf vorzugsweise einen Richtungswechsel aufweist. Somit kann ein Gas zur Entlüftung vorteilhaft über einen Entlüftungskanal aus der wenigstens einen Kammer entweichen. Der Richtungswechsel ist vorzugsweise so ausgebildet, dass Platz bei dem Fluidiksystem eingespart werden kann. Ferner von Vorteil bei einem Entlüftungskanal, welcher einen Richtungswechsel in seinem Verlauf aufweist, kann sein, dass der Richtungswechsel so ausgebildet bzw. ausgerichtet ist, dass ein Gas bei der Befüllung der Kammer optimal durch den Entlüftungskanal bewegt werden kann, insbesondere, während einer Zentrifugation.

Bei einer vorteilhaften Ausgestaltung kann vorgesehen sein, dass zwischen wenigstens einer Entlüftungsöffnung und der Zulauföffnung wenigstens eine Ecke ausgebildet ist. Hierdurch können wenigstens eine der Entlüftungsöffnungen und die Zulauföffnung an unterschiedlichen Wänden der Kammer realisiert sein. Dies ist insofern vorteilhaft für Entlüftungen und/oder Befüllungen einer Kammer, da Entlüftungsöffnungen und die oder eine Zulauföffnung vorzugsweise an unterschiedlichen, insbesondere vertikalen, Positionen einer Kammer positioniert werden können. Somit kann ein Volumen einer Kammer optimal ausgenutzt werden, wodurch weitere Kammern und Verbindungskanäle eingespart werden können, wodurch das Fluidiksystem relativ einfach und kostengünstig hergestellt werden kann.

Bei einer vorteilhaften Ausgestaltung kann vorgesehen sein, dass die wenigstens zwei Entlüftungsöffnungen zusammengeführt sind. So kann vorgesehen sein, dass jede der beiden Entlüftungsöffnungen einen wie zuvor beschriebenen oder nachfolgend beanspruchten Entlüftungskanal aufweist, wobei beide Entlüftungskanäle zusammengeführt sind. Somit kann die Herstellung eines Fluidiksystems vereinfacht werden, da weniger Mikrostrukturen und ein geringer Platz eingenommen werden muss.

Insbesondere in einem spitzen Winkel zusammengeführte Entlüftungsöffnungen sind von Vorteil, da eine Platzersparnis noch größer sein kann, insbesondere, wenn der Winkel besonders spitz ist.

Bei einer vorteilhaften Ausgestaltung kann vorgesehen sein, dass die Kammer wenigstens eine in einen Überlaufkanal übergehenden Überlauföffnung hat. Somit kann übertretende Flüssigkeit durch die Überlauföffnung und den Überlaufkanal aus der Kammer entweichen, was vorteilhaft ist, da somit ein Rückfluss durch die Zulauföffnung vermieden werden kann. Durch die Positionierung einer Überlauföffnung kann auch das maximale Füllvolumen einer Kammer definiert sein, was insbesondere zur Druckregulierung der Kammer vorteilhaft sein kann.

Der Überlaufkanal kann die Kammer mit einer Abfallkammer und/oder einer Haltekammer verbinden, in die Flüssigkeit überführt würde, sollte zu viel Flüssigkeit in die Kammer befüllt werden. Somit kann eine Flüssigkeit entsorgt und/oder gehalten werden.

Vorzugsweise ist die Überlauföffnung oberhalb der Zulauföffnung positioniert. Dies kann beispielsweise dadurch realisiert sein, dass der Überlaufkanal über einen Zuleitungskanal von einem Hauptvolumen der Kammer getrennt ist. Somit kann vorteilhaft gewährleistet sein, dass keine kostbare Probenflüssigkeit und/oder Ausgleichssubstanz verloren geht.

Bei einer vorteilhaften Ausgestaltung kann vorgesehen sein, dass die Zulauföffnung als Zulaufbereich ausgebildet ist. Somit kann der Zulaufbereich als der zuvor beschriebene Zuleitungskanal fungieren, wodurch keine weitere Struktur in das Fluidiksystem eingebracht werden muss, was noch mehr Platz und Kosten sparen kann.

Dabei kann der Zulaufbereich verschieden ausgestaltet sein, um Flüssigkeit optimal aufnehmen zu können. So kann beispielsweise die Zulauföffnung zur Kammer hin schmaler ausgebildet sein als der Rest des Zulaufbereichs. Dadurch kann Flüssigkeit vor Eintritt in die Kammer gesammelt werden und langsam überführt werden, wodurch vorteilhaft Blasen vermieden werden können.

Insbesondere vorteilhaft kann es sein, wenn sich die Überlauföffnung oberhalb des Zulaufbereichs befindet. Somit können besonders viel Platz und Kosten gespart werden, da somit Zulauföffnung und Überlauföffnung an dem Zulaufbereich ausgebildet sind.

Bei einer vorteilhaften Ausgestaltung kann vorgesehen sein, dass wenigstens ein mit der oder einer Kammer verbundener Fluidikkanal einen siphonartigen Verlauf hat. Somit kann eine Flüssigkeit aus der Kammer geführt werden, wenn sich der Probenträger dreht. Beispielsweise kann ein siphonartiger Überlaufkanal, wie zuvor beschrieben oder nachfolgend beansprucht, zur Weiterleitung einer aus der Kammer überlaufenden Flüssigkeit auch dann Verwendung finden, wenn der zentrifugierbare Probenträger um eine zweite Rotationsachse gedreht wird. Somit kann ein Probenträger besonders effektiv genutzt werden.

Auch kann durch den siphonartigen Verlauf eines Fluidikkanals auf extra Fluidikbauteile, vorzugsweise zur Lenkung der Flüssigkeit, verzichtet werden, was die Herstellung eines Fluidiksystems vereinfachen und beschleunigen kann.

Bei einer vorteilhaften Ausgestaltung kann vorgesehen sein, dass die oder eine Kammer wenigstens eine Einbuchtung hat, die in das Innere der Kammer ragt. Hierdurch kann eine Außenkontur der Kammer konkav ausgebildet sein. Ferner kann die Kammer durch eine Einbuchtung in wenigstens zwei Kompartimente unterteilt werden, wodurch eine Trennung der oder einer Flüssigkeit in der gleichen Kammer vorgenommen werden kann, was von Vorteil ist.

Vorzugsweise ist dabei die wenigstens eine Zulauföffnung und/oder die wenigstens eine Entlüftungsöffnung zwischen der Einbuchtung und einer Zentrifugalachse positionierbar. Somit kann ein unkontrolliertes Aus- und/oder Zurückfließen einer Flüssigkeit über einen Entlüftungskanal und/oder zuführenden Fluidikkanal verhindert werden. Somit können andere Segmente des Fluidiksystems und/oder des Probenträgers vor Flüssigkeit geschützt werden.

Hierbei können die Zulauföffnung und die wenigstens eine Entlüftungsöffnung auf entgegenliegenden Seiten der Einbuchtung angeordnet sein, sodass selbst bei einem Schwenken des Probenträgers, beispielsweise im Uhrzeigersinn, keine Flüssigkeit unkontrolliert durch eine Entlüftungsöffnung und/oder Zulauföffnung austreten kann.

Es kann auch vorgesehen sein, dass eine Anordnung aus Entlüftungsöffnung, Einbuchtung und Zulauföffnung einen Flüssigkeitsaustritt aus einer Kammer verhindert, auch wenn der Probenträger eine Schwenkbewegung entgegen den Uhrzeigersinn vollzieht.

Somit können Kammern, vorzugsweise Abfallkammern und Haltekammern, besonders auslaufsicher gestalten werden, was Fluidiksysteme von zentrifugierbaren Probenträgern verbessert.

Bei einer vorteilhaften Ausgestaltung kann vorgesehen sein, dass die Kammer über die Zulauföffnung mit einer Vorkammer verbunden ist. Somit kann eine Flüssigkeit über die Vorkammer in die Kammer überführt werden. Die Ausgestaltung und Positionierung der Vorkammer ist optimal an die Kammer angepasst, sodass die Kammer während der Zentrifugation befüllt werden kann.

So kann die Vorkammer vorzugsweise eine Gleitwand mit zur Zulauföffnung hin abnehmenden Neigung aufweisen. Hierdurch kann eine Flüssigkeit während der Zentrifugation die Neigung entlang zur Zulauföffnung der Kammer hinfließen, wodurch vorteilhaft die Flüssigkeit in die Kammer verlangsamt überführt werden kann. Somit können Verwirbelungen der Flüssigkeit vermindert bzw. verhindert werden.

Die Vorkammer kann innerhalb der zuvor beschriebenen oder nachfolgend beanspruchten Anordnung von Kammern ausgebildet sein, wodurch ein besonders kompakter, zentrifugierbarer Probenträger ausgebildet sein kann.

Bei einer vorteilhaften Ausgestaltung kann vorgesehen sein, dass die Vertiefung gegenüber einer Zulauföffnung angeordnet ist. Hierdurch kann eine über die Zulauföffnung eintretende Flüssigkeit über einen relativ kurzen Weg zu der Vertiefung überführt und dort gehalten zu werden. Ferner kann dadurch vorteilhaft nicht nur Platz gespart werden, sondern auch das Einlaufen der Flüssigkeit über die Zulauföffnung und das Befüllen der Vertiefung synchronisiert werden, was Prozesszeiten reduzieren kann. Letzteres ist insbesondere dann wichtig, wenn in der Vertiefung Verarbeitungsschritte, wie zu vor beschrieben, durchgeführt werden.

Alternativ oder zusätzlich kann vorgesehen sein, dass die Vertiefung in der von einer Wand definierten Kammer derart angeordnet ist, dass ein minimaler Abstand der Vertiefung zu der Zulauföffnung größer als ein minimaler Abstand der Vertiefung zu der Wand beträgt. Somit kann eine Vertiefung auch beabstandet zu der Zulauföffnung und einer Wand der Kammer angeordnet sein, wodurch eine Vertiefung flexibel an die Dimensionen einer Kammer angepasst sein kann, was von Vorteil ist.

Bei einer vorteilhaften Ausgestaltung kann vorgesehen sein, dass die Vertiefung mit einer vorzugsweise getrockneten Substanz gefüllt ist. Dabei kann die getrocknete Substanz Bestandteile beinhalten, die zum Nachweis von Mikropartikeln benötigt werden. So kann beispielsweise wenigstens ein DNA-Marker-Molekül zum spezifischen Nachweis von Mikroorganismen als getrocknete Substanz oder als Teil derer in der oder einer Vertiefung vorgehalten werden. Die getrocknete Substanz kann dann durch eine Flüssigkeit (beispielsweise eine Ausgleichssubstanz), welche in die Kammer überführt wird, aktiviert werden, sodass vorteilhaft ein Verarbeitungsschritt, wie zuvor beschrieben, durchgeführt werden kann.

Durch Vertiefungen mit einem erfinderischen Gedanken, also jene zuvor beschriebenen oder nachfolgend beanspruchten Vertiefungen, können bei einem zentrifugierbaren Probenträger verschiedene und/oder komplexe Verfahrensschritte durchgeführt werden. Somit können auf einem zentrifugierbaren Probenträger beispielsweise unterschiedlichste Nachweisverfahren für Mikroorganismen durchgeführt werden.

Bei einer vorteilhaften Ausgestaltung kann vorgesehen sein, dass die Zulauföffnung an einem freien Ende des Vorsprungs angeordnet ist oder dass die Zulauföffnung in einer Nachbarschaft eines Fußes des Vorsprungs angeordnet ist. Vorteilhaft daran ist, dass die oder eine Zulauföffnung an verschiedenen Bereichen des Vorsprungs ausgebildet sein kann, wodurch ein Vorsprung variabel in Kammern positioniert werden kann.

Bei einer vorteilhaften Ausgestaltung kann vorgesehen sein, dass die offene Seite als Aufnahmebereich für ein Probennahmeinstrument ausgebildet ist. Somit kann vorteilhaft eine Umweltprobe des Fluidiksystems des zentrifugierbaren Probenträgers zugeführt werden, ohne dass das Fluidiksystem und/oder zentrifugierbare Probenträger zusätzlich geöffnet werden müssen. Dies ist insbesondere dann vorteilhaft, wenn hochsensible Nachweisverfahren (beispielsweise von Mikroorganismen) durchgeführt werden, bei denen mögliche Störquellen, wie Kontaminationen, vermieden werden sollen.

Dabei kann der Aufnahmebereich passgenau an eine Ausbildung eines Probennahmeinstruments realisiert sein, sodass eine Probe auch vorzugsweise während einer Zentrifugation entnommen werden kann.

Generell kann der Aufnahmebereich nach Außen verschließbar sein, sodass keine Umweltprobe und/oder eine Flüssigkeit nach Außen dringen kann. Somit kann vorteilhaft die Umweltprobe und/oder ein außerhalb des Probenträger befindliches Gerät geschützt werden.

Insbesondere kann vorgesehen sein, dass zwischen einem Ausgang des Aufnahmebereichs und einem Abfluss des Aufnahmebereichs beabstandet eine Spülöffnung positioniert ist. Über die Spülöffnung kann der Umweltprobe eine Ausgleichssubstanz, beispielsweise eine Pufferlösung, zugeführt werden, wodurch sensible Komponenten der Umweltprobe vorteilhaft geschützt und/oder in einem Verfahrensschritt für eine Analyse vorbereitet werden können.

Ferner kann eine über die Spülöffnung eintretende Ausgleichssubstanz für ein optimales Entfernen der Mikropartikel, insbesondere von Mikroorganismen, aus dem Probennahmeinstrument sorgen, was insbesondere bei einer Quantifikation von Mikropartikeln wichtig sein kann.

Bei einer vorteilhaften Ausgestaltung kann vorgesehen sein, dass der Aufnahmebereich eine Kerbe aufweist. Die Kerbe kann so ausgebildet sein, dass ein Probennahmeinstrument daran leichter gebrochen werden kann, sodass ein Bruchstück des Probennahmeinstruments ohne Probe sicher entfernt werden kann. Das im Aufnahmebereich befindliche Bruchstück des Probennahmeinstruments kann ferner durch die Kerbe im Aufnahmebereich gehalten sein, was vorteilhaft ist. Ein Kerbe kann allgemein die Zufuhr einer Umweltprobe in das Fluidiksystem und/oder in den zentrifugierbaren Probenträger verbessern.

Bei einer vorteilhaften Ausgestaltung kann vorgesehen sein, dass der Grundkörper eine Wandung aufweist, welche das Fluidiksystem begrenzt. Somit kann das Fluidiksystem vor äußeren Einflüssen geschützt werden.

Insbesondere kann dabei vorgesehen sein, dass eine Wandstärke der Wandung höchstens ein Zehntel einer Dicke des Probenträgers beträgt. Hierdurch können Material und Kosten gespart werden, was insbesondere in der Massenproduktion vorteilig ist.

Alternativ oder zusätzlich kann die Wandstärke zwischen zwei Punkten der Wandung maximal um einen Faktor zwei variieren. Hierdurch kann eine Variation der Wandstärke eines Grundkörpers relativ gering ausgestaltet sein, sodass eine Fertigung eines zentrifugierbaren Probenträgers noch kostengünstiger ausgestaltet werden kann.

Bei einer vorteilhaften Ausgestaltung kann vorgesehen sein, dass der wenigstens eine Befestigungsflügel durch die Wandung des Grundkörpers ausgebildet ist. Somit können Befestigungsflügel und Grundkörper einteilig ausgebildet sein, wodurch der wenigstens eine Befestigungsflügel stabiler ausgebildet sein kann, was vorteilhaft für Lebensdauer eines zentrifugierbaren Probenträgers sein kann. Zusätzlich kann auch die Fertigung eines wie soeben beschriebenen, einteiligen Grundkörpers kostengünstiger sein, insbesondere auch dann, wenn mehr als ein Befestigungsflügel realisiert wird.

Insbesondere kann der wenigstens eine Befestigungsflügel an einem Rand des Grundkörpers ausgebildet sein, was ein Einbringen des Probenträgers an einer korrespondierenden Halterung einer Zentrifuge erleichtern kann.

Bei einer vorteilhaften Ausgestaltung kann vorgesehen sein, dass sich der wenigstens eine Befestigungsflügel mindestens über eine Hälfte einer Längsausdehnung des Probenträgers erstreckt. Somit kann ein relativ großer und stabiler Befestigungsbereich eines Probenträgers geschaffen sein, was insbesondere vorteilhaft bei Zentrifugationen mit relativ hohen Drehzahlen sein kann.

Bei einer vorteilhaften Ausgestaltung kann vorgesehen sein, dass der wenigstens eine Befestigungsflügel von wenigstens einer Aussparung begrenzt ist. Somit kann ein Befestigungsflügel noch verformbarer ausgebildet sein, was ein wie zuvor beschriebenes Einrasten noch kundenfreundlicher sein lassen kann.

Ferner kann die wenigstens eine Aussparung korrespondierend zu einem Bauelement einer Zentrifugenhalterung ausgebildet sein, wodurch ein zentrifugierbarer Probenträger besonders stabil in der Zentrifuge gehalten werden kann.

Bei einer vorteilhaften Ausgestaltung kann vorgesehen sein, dass die Kammern der Anordnung sternförmig oder vermascht angeordnet sind. Hierdurch können die Kammern einer wie zuvor beschriebenen oder nachfolgend beanspruchten Anordnung von Kammern vorzugsweise über ein zentrales Bauelement (zum Beispiel eine Kammer der Anordnung und/oder ein Fluidikkanal) verbunden sein und/oder jede Kammer ist mit wenigstens einer anderen Kammer der Anordnung verbunden. Somit können Kammern des Fluidiksystems einfach miteinander vernetzt sein, sodass eine Umweltprobe auf kurzen Wegen von einer Kammer in eine andere Kammer der Anordnung bewegt werden kann. Somit können vorzugsweise komplexe und mehrstufige Verfahren durchgeführt werden, was das Arbeiten mit zentrifugierbaren Probenträgern besonders verbessern kann.

Ferner kann bei einer sternförmigen und/oder vermaschten Anordnung wenigstens eine Kammer als "Notfallkammer" fungieren, wodurch eine besonders hohe Ausfallsicherheit gewährleistet sein kann, was von Vorteil ist.

Bei einer weiteren vorteilhaften Ausgestaltung kann vorgesehen sein, dass das Fluidiksystem wenigstens eine, beispielsweise in einer Richtung einer Zentrifugalkraft, gestapelte Anordnung von Kammern aufweist. Durch eine derartige Anordnung können die jeweiligen Kammern gleichmäßig befüllbar und/oder entleerbar sein. Durch die Stapelanordnung kann somit eine Richtung für die Zentrifugalkraft in Bezug auf den Probenträger gewählt werden, bei der die Stapelanordnung "von oben nach unten" ausgerichtet ist. Dies ermöglicht eine einfache Aufteilung eines Probenvolumens in Teilvolumina, die für unterschiedliche nachfolgende Prozessschritte verwendbar sind und/oder verwendet werden. Die Richtung der Zentrifugalkraft kann dabei der Richtung der Zentrifugalkraft entsprechen, die bei einer Zentrifugation des Probenträgers auftritt. Beispielsweise kann durch eine Schwenkbarkeit des Probenträgers auf einem Teller einer Zentrifugiervorrichtung die Richtung der Zentrifugalkraft (und somit ein "oben" und ein "unten") in Bezug auf den Probenträger leicht verändert werden.

Diese gestapelten Anordnungen können beispielsweise auch quer zu einer Stapelrichtung versetzt zueinander angeordnet sein oder in Stapelrichtung direkt untereinander.

Beispielsweise kann wenigstens eine Kammer der gestapelten Anordnung in der Fluidik einen Ablauf aufweisen, der in Bezug auf einen Zulauf dieser Kammer in der Stapelrichtung einen Überlauf darstellt. Dieser Ablauf kann beispielsweise in die in Stapelrichtung nachfolgende Kammer münden. Dies ermöglicht auf einfache Weise ein Aufteilen eines Probenvolumens auf Teilvolumina. Bevorzugt sind alle Kammern der gestapelten Anordnung so ausgestaltet, oder die nachfolgenden Zuläufe weisen entsprechende Verzweigungen auf, um bei einem Überlauf die nachfolgende Kammer zu füllen.

Beispielsweise kann vorgesehen sein, dass ein Ablauf, beispielsweise der bereits erwähnte Ablauf, einer Kammer der gestapelten Anordnung eine Verzweigung aufweist, die einerseits in die nachfolgende Kammer in der gestapelten Anordnung und andererseits in eine weiter nachfolgende Kammer mündet. Somit ist ein weiterer Überlauf platzsparend ausbildbar, um ein sukzessives Befüllen der gestapelten Anordnung zu erreichen.

Es kann auch vorgesehen sein, dass der Ablauf eine Verzweigung aufweist, die einerseits in die nachfolgende Kammer und andererseits in einen weiteren Prozessierungsweg führt. Somit ist durch geeignete Änderung der Ausrichtung der Zentrifugalkraft der weitere Prozessierungsweg befüllbar, ohne das weitere Abläufe an der nachfolgenden Kammer ausgebildet werden müssen.

Es kann vorgesehen sein, dass einzelne oder alle Kammern der gestapelten Anordnung einen weiteren Ablauf aufweisen, der - bevorzugt in einer anderen relativen Orientierung einer Zentrifugalkraft, in einen spezifischen Prozessierungsweg mündet oder übergeht. Dies ermöglicht auf einfache Weise eine spezifische oder unterschiedliche Verarbeitung einzelner oder aller der erwähnten Teilvolumina.

Es können auch mehrere gestapelte Anordnungen von Kammern vorgesehen sein, die in unterschiedliche Richtungen ausgerichtet sind. Durch eine Drehung des Probenträgers während einer Zentrifugation kann die Richtung der Zentrifugalkraft geändert werden, sodass eine andere gestapelte Anordnung befüllt und/oder entleert werden kann. Bei einer vorteilhaften Ausgestaltung kann vorgesehen sein, dass wenigstens eine Wand einer Kammer der Anordnung konkav gewölbt ist. Somit kann eine Flüssigkeit langsam entlang der gewölbten Wand bewegt werden, wodurch insbesondere sensible Inhaltsstoffe der Flüssigkeit geschützt werden können.

Insbesondere kann jede Kammer der Anordnung wenigstens eine konkav gewölbte Kammer aufweisen. Somit kann ein Flüssigkeitstransfer langsam und schonend durch die gesamte Anordnung vollzogen werden, was vorteilhaft ist.

Bei einer vorteilhaften Ausgestaltung kann vorgesehen sein, dass jede Kammer der Anordnung mit wenigstens einer anderen Kammer der Anordnung durch wenigstens einen Fluidikkanal verbunden ist. Durch einen Fluidikkanal können die Kammern der Anordnung strukturell und/oder kostentechnisch günstig verbunden sein, was insbesondere bei einer wie zuvor beschriebenen und nachfolgend beanspruchten sternförmigen oder vermaschten Anordnung von Vorteil sein kann.

Bei einer vorteilhaften Ausgestaltung kann vorgesehen sein, dass die Anordnung wenigstens einen Mittelpfosten aufweist, wobei der Mittelpfosten wenigstens eine Wandung einer ersten und einer zweiten Kammer der Anordnung ausbildet. Ein Mittelpfosten kann jegliche Form ausbilden, um wenigstens eine Wandung einer ersten und einer zweiten Kammer auszubilden. Hierdurch kann eine Anordnung aus Kammern variabel und kostengünstig hergestellt werden.

Dabei kann eine durch den Mittelpfosten präsentierte Wandung auch so ausgebildet sein, dass eine Flüssigkeit daran zu- und/oder abließen kann. So kann die wenigstens eine durch den Mittelpfosten ausgebildete Wandung einer Kammer den wie zuvor beschriebenen oder nachfolgend beanspruchten, abragenden Vorsprung ausbilden. Hierdurch kann ein Mittelpfosten vielfältig genutzt werden.

Eine hohe Variabilität kann erreichbar sein, wenn der Mittelpfosten durch eine Steckverbindung kurz vor einer Fertigstellung des zentrifugierbaren Probenträgers in die oder eine Anordnung gebracht wird. So kann je nach Verfahrensanforderung und/oder Anwenderwunsch ein spezifischer Mittelpfosten verwendet werden, der eine Anordnung spezifisch ausgestaltet kann. So kann beispielsweise durch die Wahl des Mittelpfostens eine Anzahl der Kammern in einer Anordnung bestimmt werden. Hierdurch kann besonders vorteilhaft der oder ein zentrifugierbarer Probenträger variabel ausgestaltet werden.

Insbesondere kann dabei vorgesehen sein, dass wenigstens zwei Kammern durch einen am Mittelpfosten ausgebildeten Fluidikkanal verbunden sind. Somit kann eine Flüssigkeit durch den Mittelpfosten schnell von einer Kammer in einer andere Kammer der Anordnung überführt werden, was von Vorteil ist.

Bei einer vorteilhaften Ausgestaltung kann vorgesehen sein, dass wenigstens drei Kammern der wenigstens einen Anordnung in einem gemeinsamen Verbindungsbereich münden. Hierdurch kann vorteilhaft ein relativ großer Verbindungsbereich geschaffen werden, welcher relativ große Volumina bei geringerer Druckbelastung eines Fluidiksystems, insbesondere eines Mikrofluidiksystems, überführen kann. Ferner von Vorteil bei einem gemeinsamen Verbindungsbereich kann ein schnellerer Flüssigkeitstransfer zwischen den Kammern sein, die in den Verbindungsbereich münden.

Der Verbindungsbereich kann wenigstens teilweise als ein wie zuvor beschriebener Mittelpfosten ausgebildet sein, wobei eine Vernetzung der Kammer kostengünstig realisiert sein kann.

Bei einer vorteilhaften Ausgestaltung kann vorgesehen sein, dass jede Kammer der wenigstens einen Anordnung mit einem Messbereich verbunden ist. Hierdurch kann vorteilhaft eine zu untersuchende Umweltprobe von jeder Kammer der Anordnung zu einem Messbereich überführt werden, um analysiert zu werden.

Dabei kann eine Verbindung einer Kammer direkt, vorzugsweise über einen Fluidikkanal, und/oder indirekt, über eine weitere Kammer und/oder einen wie zuvor beschriebenen oder nachfolgend beanspruchten Mittelpfosten, ausgebildet sein. Somit kann eine Verbindung einer Kammer der wenigstens einen Anordnung mit dem Messbereich besonders variabel ausgestaltet sein, wodurch besonders schrittreiche Verfahren in einem zentrifugierbaren Probenträger durchgeführt werden können.

Bei einer vorteilhaften Ausgestaltung kann vorgesehen sein, dass die wenigstens eine Anordnung mit wenigstens einer weiteren Anordnung an Kammern verbunden ist. Hierdurch können noch komplexere Verfahren durchgeführt werden, was von Vorteil ist.

Alternativ oder zusätzlich kann die wenigstens eine Anordnung mit einer weiteren Kammer verbunden sein. In der weiteren Kammer kann vorteilhaft wenigstens ein weiterer Verfahrensschritt durchgeführt werden. Die weitere Kammer kann auch eine Abfall- und/oder Haltekammer sein, wodurch Flüssigkeit aus der wenigstens einen Anordnung entsorgt und/oder vorgehalten werden kann. Durch eine Verbindung der wenigstens einen Anordnung mit wenigstens einer weiteren Kammer können Reaktionen bzw. Verfahren auf dem zentrifugierbaren Probenträger besonders variabel ausgestaltet und an Anwenderwünsche angepasst sein.

Bei einer vorteilhaften Ausgestaltung kann vorgesehen sein, dass ein Volumen der Vorratskammer wenigstens um einen Faktor zwei größer ist als ein Volumen der Dosierkammer. Somit kann eine Dosierkammer mehrmals mit einer Ausgleichssubstanz befüllt werden, sodass vorteilhaft ein sequenzielles Befüllen von mit der Dosierkammer verbundenen Elementen eines Fluidiksystems realisierbar ist.

Insbesondere kann ein Volumen der Vorratskammer wenigstens um einen Faktor fünf größer sein als ein Volumen der Dosierkammer. Hierdurch kann eine Dosierkammer besonders häufig mit einer Ausgleichssubstanz befüllt werden, sodass ein wie zuvor beschriebenes, sequenzielles Befüllen besonders effizient durchgeführt werden kann.

Generell kann das Verhältnis zwischen einem Volumen einer Vorratskammer und einem Volumen einer Dosierkammer an spezifische Analyseverfahren angepasst sein.

Bei einer vorteilhaften Ausgestaltung kann vorgesehen sein, dass ein die Auslauföffnung verlassender Fluidikkanal einen siphonartigen Verlauf hat. Durch den siphonartigen Verlauf kann verhindert werden, dass beim Befüllen der oder einer Dosierkammer eine Flüssigkeit sofort davon fließt. Hierdurch kann ein Befüllen von Elementen eines Fluidiksystems gesteuert werden, was insbesondere vorteilhaft bei zentrifugierbaren Probenträgern sein kann, welche sich um eine zweite Rotationsachse bewegen können.

Bei einer vorteilhaften Ausgestaltung kann vorgesehen sein, dass die Vorratskammer eine Einbuchtung hat, die in das Innere der Vorratskammer ragt. Somit kann die Vorratskammer zumindest teilweise in Kompartimente unterteilt werden, wodurch eine Flüssigkeit und/oder die zuvor beschriebene Ausgleichssubstanz gezielt in einem bestimmten Kompartiment der Vorratskammer gehalten werden kann, was vorteilhaft ist.

Insbesondere kann dabei vorgesehen sein, dass eine Verbindungslinie zwischen der Einlauföffnung der Vorratskammer und einer Auslauföffnung der Vorratskammer durch die Einbuchtung verläuft. Somit kann ein unerwünschter Ausfluss einer Flüssigkeit und/oder der zuvor beschriebenen Ausgleichssubstanz selbst bei einer 360°-Drehung eines zentrifugierbaren Probenträgers um dessen eigene Rotationsachse vermieden werden.

Bei einer vorteilhaften Ausgestaltung kann vorgesehen sein, dass zwischen der Vorratskammer und der Dosierkammer Belüftungsstrukturen ausgebildet sind. Unter Belüftungsstrukturen sind insbesondere dem Fachmann bekannte Belüftungsstrukturen gemeint, welche bei Fluidiksystemen Verwendung finden. Durch die Verwendung von Belüftungsstrukturen kann ein blasenfreies Befüllen einer und/oder der zuvor beschriebenen Dosierkammer mit einer Ausgleichssubstanz erfolgen, was vorteilhaft für eine Dosierung ist.

Bei einer vorteilhaften Ausgestaltung kann vorgesehen sein, dass die Vorratskammer mit einem eine Ausgleichssubstanz enthaltenen Reservoir verbunden ist. Hierdurch kann die Ausgleichssubstanz in einem Reservoir bis zu einer Verwendung vorgehalten werden. Dabei kann das Reservoir die Ausgleichssubstanz bis zur Benutzung des zentrifugierbaren Probenträgers zur Analyse von beispielsweise Mikroorganismen schützen. Dadurch kann eine Haltbarkeit des zentrifugierbaren Probenträgers vorteilhaft verlängert werden.

Insbesondere kann dabei vorgesehen sein, dass das Reservoir als eine druckaktivierbare Ausflussvorrichtung ausgebildet ist. Somit kann die Ausgleichssubstanz durch eine Druckaktivierung in die Vorratskammer entlassen werden, was vorteilhaft ist.

Bei einer vorteilhaften Ausgestaltung kann vorgesehen sein, dass zwischen einer Vertiefung und dem Reservoir ein Aktivierungselement zur Druckaktivierung des Reservoirs ausgebildet ist. Dabei kann das Reservoir zumindest teilweise über einer Vertiefung positioniert sein, in der sich ein Aktivierungselement zur Druckaktivierung befindet. Hierdurch kann vorteilhaft das Aktivierungselement platzsparend in dem zentrifugierbaren Probenträger positioniert sein, sodass vorzugsweise das Fluidiksystem keine räumliche Einschränkung erfahren muss.

Insbesondere kann das Aktivierungselement ein Dorn sein. Ein Dorn kann besonders platzsparend ausgebildet sein, was von Vorteil ist.

Ferner kann das Aktivierungselement, insbesondere der Dorn, zur Druckaktivierung des Reservoirs aktiv und/oder passiv zur Druckaktivierung ausgebildet sein. Dadurch können vorteilhaft unterschiedliche Aktivierungselemente an verschiedenartig ausgebildete zentrifugierbare Probenträger angepasst werden.

Ein aktives Aktivierungselement kann als beweglicher Dorn ausgebildet sein.

Ein passives Aktivierungselement kann ein unbeweglicher Dorn sein, wobei das Reservoir auf den Dorn gedrückt wird, wodurch die Ausgleichssubstanz aus dem Reservoir entlassen wird.

Bei einer vorteilhaften Ausgestaltung kann vorgesehen sein, dass eine Verbindungslinie zwischen der Einlauföffnung der Vorratskammer und einer Auslauföffnung des Reservoirs durch die Vorratskammer verläuft. Somit kann ein Verbindungskanal zwischen Einlauföffnung der Vorratskammer und der Auslauföffnung des Reservoirs wenigstens einen Richtungswechsel aufweisen. Hierdurch kann verhindert werden, dass eine Ausgleichssubstanz nach Druckaktivierung des Reservoirs aus der Auslauföffnung direkt über die Einlauföffnung in die Vorratskammer läuft. Somit kann die Vorratskammer gezielt, vorzugsweise durch eine Rotationsbewegung des zentrifugierbaren Probenträgers, mit der Ausgleichssubstanz befüllt werden, was von Vorteil ist.

Bei einer vorteilhaften Ausgestaltung kann vorgesehen sein, dass eine Verbindungslinie zwischen Vorratskammer und Reservoir durch die Dosierkammer verläuft. Somit kann die Dosierkammer zwischen Reservoir und Vorratskammer ausgebildet sein, wodurch vorteilhaft Platz auf dem zentrifugierbaren Probenträger ausgebildet sein kann.

Dabei können Reservoir, Vorratskammer und Dosierkammer so angeordnet sein, dass ein Transfer einer Ausgleichssubstanz stufenweise, d.h. vorzugsweise in Abhängigkeit eines größer werdenden Drehwinkels eines rotierenden, zentrifugierbaren Probenträgers, vom Reservoir über die Vorratskammer in die Dosierkammer hinein überführt werden kann. Somit kann ein Befüllen, insbesondere ein wie zuvor beschriebenes sequenzielles Befüllen, von mit der Dosierkammer verbundenen Elementen eines Fluidiksystems noch effizienter realisiert werden.

Bei einer vorteilhaften Ausgestaltung kann vorgesehen sein, dass das Abdeckelement transparent ausgebildet ist. Ein transparentes Abdeckelement kann so ausgebildet sein, dass eine in dem Fluidiksystem befindliche Umweltprobe durch das Abdeckelement aufgezeichnet werden kann. Somit kann eine optische Vor-Aufzeichnung einer Umweltprobe durchgeführt werden, ohne dass das Abdeckelement abgenommen werden muss. Somit kann beispielsweise überprüft werden, ob genügend Mikropartikel zur Aufzeichnung in einem oder dem zuvor genannten Messbereich gesammelt sind.

Vorzugsweise kann das transparente Abdeckelement als selbstklebende Abdeckfolie ausgebildet sein.

Eine selbstklebende Abdeckfolie kann sehr dünn ausgebildet sein, sodass selbst schwache, optische Messsignale durch einen vorzugsweise optischen Detektor, aufgezeichnet werden können. So können beispielsweise fluoreszierenden Mikropartikel, vorzugsweise Mikroorganismen, von einem Detektor erfasst werden, obwohl zwischen Mikroorganismen und Detektor die Abdeckfolie positioniert ist. Ferner von Vorteil kann sein, dass eine selbstklebende Abdeckfolie relativ leicht aus dem Messbereich entfernt werden kann.

Bei einer vorteilhaften Ausgestaltung kann vorgesehen sein, dass der Messbereich zumindest teilweise durch einen vorzugsweise kraft- und/ oder formschlüssig an das Fluidiksystem befestigbaren Deckel ausgebildet ist. Ein zumindest teilweise als befestigbarer Deckel ausgebildeter Messbereich kann vorteilhaft nach Fertigstellung eines vorzugsweise wie zuvor beschriebenen Grundkörpers realisiert werden. Somit kann ein Messbereich während der Konstruktion des Fluidiksystems und/oder des Grundkörpers nicht beschädigt werden.

Durch eine kraft- und/oder formschlüssige Verbindung eines befestigbaren Deckels an das Fluidiksystem kann der zentrifugierbare Probenträger vorteilhaft für Zentrifugationen und/oder Rotationsbewegungen ausgebildet sein.

Ferner kann es auch unterschiedliche befestigbare Deckel geben, sodass vorteilhaft unterschiedliche Mess- bzw. Aufzeichnungsbereiche an ein spezifisch ausgebildetes Fluidiksystem, eines zentrifugierbaren Probenträgers angebracht werden können, sodass vorteilhaft eine Baureihe von modularen Probenträgern realisierbar sein kann.

Bei einer vorteilhaften Ausgestaltung kann vorgesehen sein, dass der Deckel ein Entlüftungselement aufweist. Somit kann eine Entlüftung des Deckels und/oder des Messbereichs realisiert werden, was vorteilhaft insbesondere bei einer Befüllung des Messbereichs sein kann.

Vorzugsweise ist das Entlüftungselement ein Entlüftungsschnorchel. Der Entlüftungsschnorchel kann besonders lang ausgebildet sein und/oder eine Eingangs- und Ausgangsöffnung aufweisen, die auf unterschiedlichen Ebenen ausgebildet sind, wodurch eine besonders optimale und auslaufsichere Entlüftung des oder eines Messbereichs ausgebildet werden kann.

Insbesondere kann ein Entlüftungselement Verdickungen an einem Rand aufweisen, wodurch eine größere Fläche für ein wie zuvor beschriebenes Abdeckelement zur Verschließung des Messbereichs bereitgestellt werden kann.

Bei einer vorteilhaften Ausgestaltung kann vorgesehen sein, dass das Abdeckelement wenigstens vor der Messung das Entlüftungselement verschließt. Hierdurch kann das Abdeckelement zumindest vor der Messung verschlossen bleiben, wodurch Kontaminationen im Messbereich verringert bzw. vermieden werden können.

Bei einer vorteilhaften Ausgestaltung kann vorgesehen sein, dass das Abdeckelement mit einem vorzugsweise drehbaren Greifelement verbunden ist. Hierdurch kann das Abdeckelement vorteilhaft durch ein Greifelement aus dem Messbereich entfernt werden. Insbesondere kann das Abdeckelement durch eine drehbare Bewegungskomponente aus dem Messbereich entfernt werden, wodurch insbesondere eine selbstklebende Abdeckfolie relativ einfach aus dem Messbereich abgezogen werden kann.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigen:
- Fig. 1: einen erfindungsgemäßen Probenträger,
- Fig. 2: eine Anordnung von Kammern eines erfindungsgemäßen Probenträgers,
- Fig. 3: eine Kammer eines erfindungsgemäßen Probenträgers mit zwei Entlüftungsöffnungen,
- Fig. 4: eine Kammer eines erfindungsgemäßen Probenträgers mit einem abragenden Vorsprung,
- Fig. 5: eine Vorratskammer eines erfindungsgemäßen Probenträgers,
- Fig. 6: ein Reservoir eines erfindungsgemäßen Probenträgers,
- Fig. 7: eine Aufsicht eines Messbereichs eines erfindungsgemäßen Probenträgers ohne Abdeckelement,
- Fig. 8: eine Aufsicht eines Messbereichs eines erfindungsgemäßen Probenträgers mit Abdeckelement,
- Fig. 9: eine schematische Anordnung einer Messkammer mit einem Messbereich bei einem erfindungsgemäßen Probenträger, wobei die Messkammer mit zwei Abfallkammern fluidisch verbunden ist,
- Fig. 10: eine schematische Anordnung eines erfindungsgemäßen Probenträgers, wobei die Messkammer mit zwei Abfallkammern fluidisch verbunden ist und wobei zwischen Messkammer und einer Abfallkammer eine Pufferkammer angeordnet ist.

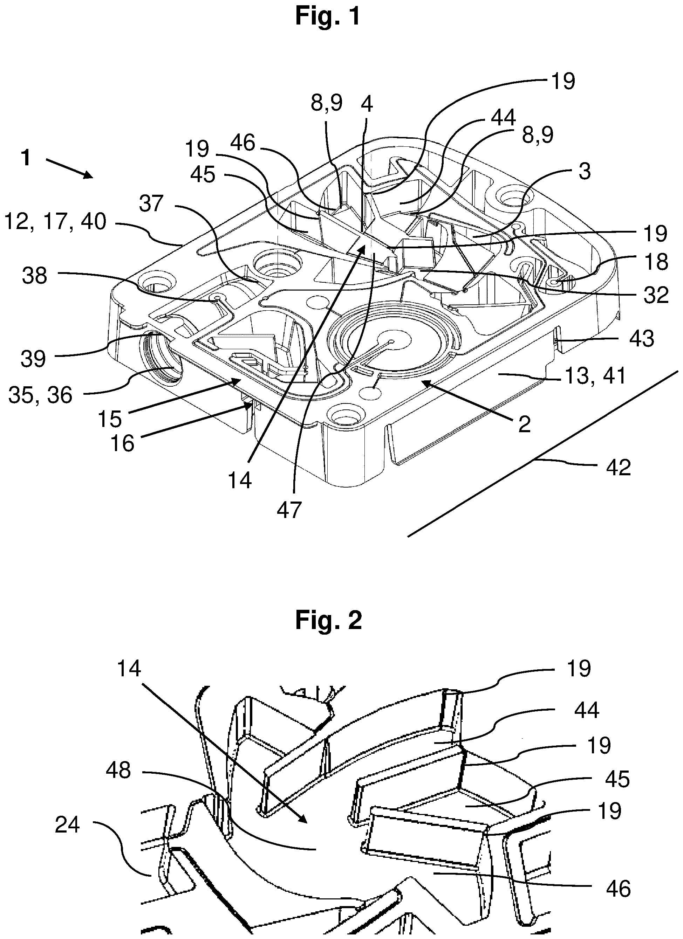

Figur 1 zeigt einen erfindungsgemäßen zentrifugierbaren Probenträger 1, welcher zur Analyse von Mikropartikeln, insbesondere zum fluoreszenzbasierten Nachweis von Mikroorganismen, geeignet ist.

Der erfindungsgemäße zentrifugierbare Probenträger 1 in Figur 1 weist ein Fluidiksystem 2 mit mehreren Kammern, unter anderem den Kammern 3, 20, 21, 32, 44, 45, 46, auf, wobei diese wenigstens eine Zulauföffnung 4 aufweisen.

Der erfindungsgemäße zentrifugierbare Probenträger 1 weist einen Grundkörper 12 auf, an dem das Fluidiksystem 2 nach einer Seite offen ausgebildet ist. Die offene Seite ist als ein Aufnahmebereich 35 für ein dem Fachmann bekanntes Probennahmeinstrument ausgebildet. Somit kann eine Umweltprobe über den Aufnahmebereich 35 in das Fluidiksystem 2 eingebracht und analysiert werden.

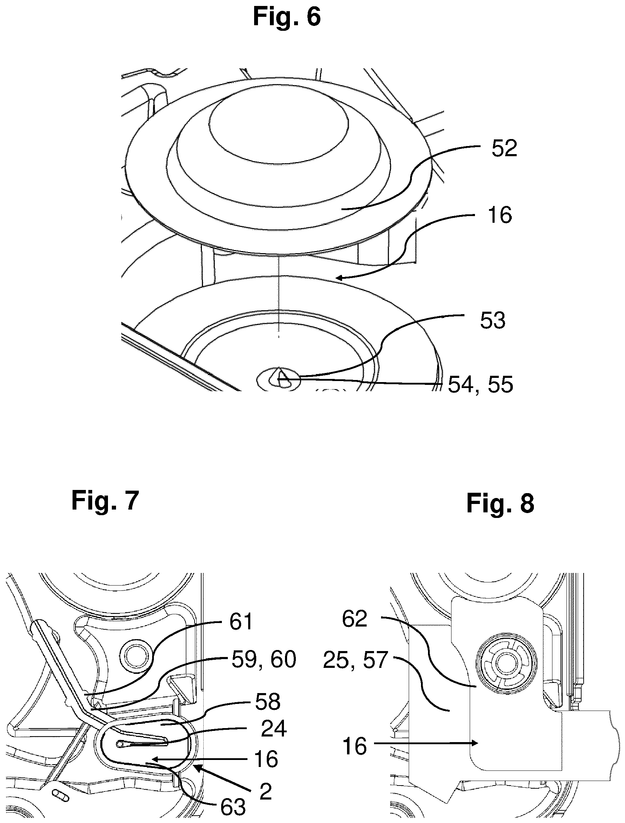

Zwischen einem Ausgang 36 des Aufnahmebereichs 35 und einem Abfluss 37 des Aufnahmebereichs 35 ist beabstandet eine Spülöffnung 38 positioniert. Diese Spülöffnung 38 ist über einen Fluidikkanal 19 mit einem Reservoir 52 verbunden, wie es in Figur 6 gezeigt ist und nachfolgend beschrieben wird. Somit kann eine Umweltprobe vorteilhaft im Aufnahmebereich 35 mit einer Ausgleichssubstanz gespült bzw. verdünnt werden, wodurch eine Umweltprobe geschützt und/oder für eine Analyse vorbereitet werden kann.

Die Aufnahme der Umweltprobe in den Aufnahmebereich 35 kann erleichtert werden, in dem eine im Aufnahmebereich 35 befindliche Kerbe 39 zum Abbrechen eines Probennahmeinstrument ausgebildet ist. So verbleibt der mit der Umweltprobe kontaktierte Teil des Probennahmeinstruments während der Analyse in dem Aufnahmebereich 35. Durch die im vorhergehenden Absatz beschriebene und nachfolgend beanspruchte Spülöffnung 38 kann eine Umweltprobe durch die Ausgleichssubstanz vorteilhaft gelöst werden.

Es kann ferner vorgesehen sein, wie es bei dem in Figur 1 dargestellten erfindungsgemäßen zentrifugierbaren Probenträger 1 der Fall ist, dass die Kerbe 39 den im Aufnahmebereich 35 befindlichen Teil des Probennahmeinstruments sicher zurückhält und optimal zum Abfluss 37 positioniert.

Während einer Zentrifugation wird eine Umweltprobe über den Abfluss 37 weiter innerhalb des Fluidiksystems 2 transportiert.

An dem Grundkörper 12 des erfindungsgemäßen zentrifugierbaren Probenträgers 1 ist wenigstens ein Befestigungsflügel 13 angebracht. In Figur 1 ist einer von zwei (gegenüberliegenden) Befestigungsflügeln 13 gezeigt. Die beiden Befestigungsflügel 13 sind an einem Rand 41 der Wandung 40 des Grundkörpers 12 ausgebildet und dienen zur Befestigung des Probenträgers 1 an einer vorzugsweise passgenauen Halterung einer Zentrifuge. Ferner sind die Befestigungsflügel 13 von zwei Aussparungen 43 begrenzt, wodurch die Befestigungsflügel 13 relativ beweglich ausgebildet sein können, wodurch eine Befestigung des Probenträgers 1 an einer Zentrifuge vereinfacht werden kann. Da sich die Befestigungsflügel 13 über die Hälfe der Längsausdehnung 42 des Probenträgers 1 erstrecken, kann der Probenträger 1 besonders einfach an einer Halterung einer Zentrifuge angebracht und während der Zentrifugation stabil gehalten werden. Somit können Analysen von Umweltproben in einem erfindungsgemäßen Probenträger 1 auch bei hohen Umdrehungszahlen durchgeführt werden.

Die Wandung 40 des Grundkörpers 12 des in Figur 1 dargestellten Probenträgers 1 begrenzt das Fluidiksystem 2. Dabei beträgt die Wandung 40 weniger als 10 % der Dicke des Probenträgers 1, was besonders vorteilhaft für die Herstellung des Probenträgers 1 sein kann, insbesondere, wenn der Probenträger 1 durch Spritzguss hergestellt wird. Ferner variiert die Wandstärke der Wandung 40 zwischen zwei Punkten maximal um einen Faktor zwei.

Der erfindungsgemäße zentrifugierbare Probenträger 1 in Figur 1 weist zwei Seiten 15, 16 auf, die durch einen umlaufenden Rand 17 vorteilhaft getrennt sind. Das Fluidiksystem 2 umfasst wenigstens einen Verbindungskanal 18, der die zwei Seiten 15, 16 verbindet. So kann auf der oberen Seite 15 des Probenträgers 1 ein Ende eines Fluidikkanals 19 in den wenigstens einen Verbindungskanal 18 übergehen. Der Verbindungskanal 18 geht auf der unteren Seite 16 in einen Fluidikkanal 19 (nicht gezeigt) über, welcher in einen Messbereich 24 führt, welcher in den Figuren 7 und 8 dargestellt ist und nachfolgend beschrieben wird. Somit kann besonders viel Platz auf beiden Seiten 15, 16 des Probenträgers 1 genutzt werden, um eine Umweltprobe zu analysieren.

Wie bereits erläutert, weist der zentrifugierbare Probenträger 1 der Figur 1 mehrere Kammern 3, 20, 21, 32, 44, 45, 46 auf. Die Kammern mit den Bezugszeichen 32, 44, 45 und 46 sind Teil einer Anordnung 14, in der jede Kammer 32, 44, 45, 46 wenigstens zu zwei weiteren Kammern der Anordnung 14 benachbart ist. Dabei umfassen die weiteren Kammern die Kammern 32, 44, 45 und 46 und nicht mit Bezugszeichen gekennzeichnete Kammern. Jedenfalls sind die Kammern der Anordnung 14 sternförmig angeordnet, können alternativ aber auch vermascht angeordnet sein.

Jede Kammer 32, 44, 45 und 46 der Anordnung 14 hat eine Wand, die konkav gewölbt ist, sodass eine Umweltprobe und/oder eine andere Flüssigkeit, insbesondere die zuvor genannte Ausgleichssubstanz, vorteilhaft durch die Kammer 32, 44, 45 und 46 transportiert werden kann.

Es kann aber auch sein, dass nur einzelne Kammern der Anordnung 14, beispielsweise die Kammern 32, 44, 45 und 46 eine oder mehrere gewölbte Wände aufweisen. Die Ausgestaltung der Anordnung 14 und insbesondere der Wände kann variabel an Kundenwünsche angepasst sein.

In Figur 1 ist ferner zu sehen, dass jede Kammer 32, 44, 45 und 46 der Anordnung 14 mit wenigstens einer anderen Kammer 32, 44, 45 und 46 der Anordnung 14 durch wenigstens einen Fluidikkanal 19 verbunden ist. Somit kann eine Umweltprobe und/oder eine andere Flüssigkeit, insbesondere die zuvor genannte Ausgleichssubstanz, beliebig zwischen den Kammern 32, 44, 45 und 46 transportiert werden. Dies ist insbesondere vorteilhaft bei Zentrifugen, worin ein Probenträger wie der Probenträger 1 auf einer zweiten Rotationsachse um vorzugsweise 360° verstellbar ist. Somit können besonders mehrstufige und/oder komplexe Verfahren zum Nachweis von Mikropartikeln, insbesondere von Mikroorganismen, durchgeführt werden.

Die Anordnung 14 kann einen Mittelpfosten 47 aufweisen, der, wie in Figur 1 erkennbar, wenigstens eine Wandung einer ersten und einer zweiten Kammer der Anordnung 14 ausbildet. So bildet der Mittelpfosten 47 beispielsweise jeweils eine Wandung der Kammern 32, 44, 45 und 46. Es ist ferner zu sehen, dass beispielsweise die Kammer 46 über einen Fluidikkanal 19 mit Vorkammer 32 vorteilhaft verbunden ist, wobei der Fluidikkanal 19 an dem Mittelpfosten 47 ausgebildet ist.

Eine Anordnung 14 eines Probenträgers 1 kann alternativ auch keinen Mittelpfosten 47 aufweisen, sodass, wie in Figur 2 dargestellt, die Kammern 44, 45, 46 in einem gemeinsamen Verbindungsbereich 48 münden. Somit können einerseits Produktionskosten gespart werden, anderseits kann eine Umweltprobe und/oder eine andere Flüssigkeit, insbesondere die zuvor genannte Ausgleichssubstanz, relativ schnell über den Verbindungsbereich 48 zu dem Messbereich 24 gelangen, der mit der Anordnung 14 verbunden ist. In der Figur 2 dargestellten Anordnung 14 ist jede Kammer über den Verbindungsbereich 48 mit dem Messbereich 24 verbunden.

Alternativ oder zusätzlich kann vorgesehen sein, dass ein Mittelpfosten 47, insbesondere der zuvor beschriebene oder nachfolgend beanspruchte Mittelpfosten 47, auf dem Probenträger 1 austauschbar befestigt werden kann. Somit kann eine Anordnung 14 von Kammern kundenspezifisch angepasst werden, was von Vorteil ist. Somit kann vorteilhaft eine Baureihe von Probenträgern 1 geschaffen werden, die sich vorzugsweise durch anpassbare Anordnungen 14 unterscheiden.

Anordnungen 14, wie sie in den Figuren 1 und 2 dargestellt sind, können auch mit wenigstens einer Kammer verbunden sein, die nicht Teil der Anordnung 14 ist. So kann eine Anordnung 14 mit einer Kammer 3 verbunden sein (Figur 1) oder mit einer Kammer, die beispielsweise einen Messbereich (Figur 2) umfasst.

Alternativ oder zusätzlich kann vorgesehen sein, dass eine Anordnung 14 mit einer weiteren Anordnung 14 von Kammern verbunden ist (nicht gezeigt). Somit können besonders stufenreiche und/oder komplexe Analyseverfahren durchgeführt werden.

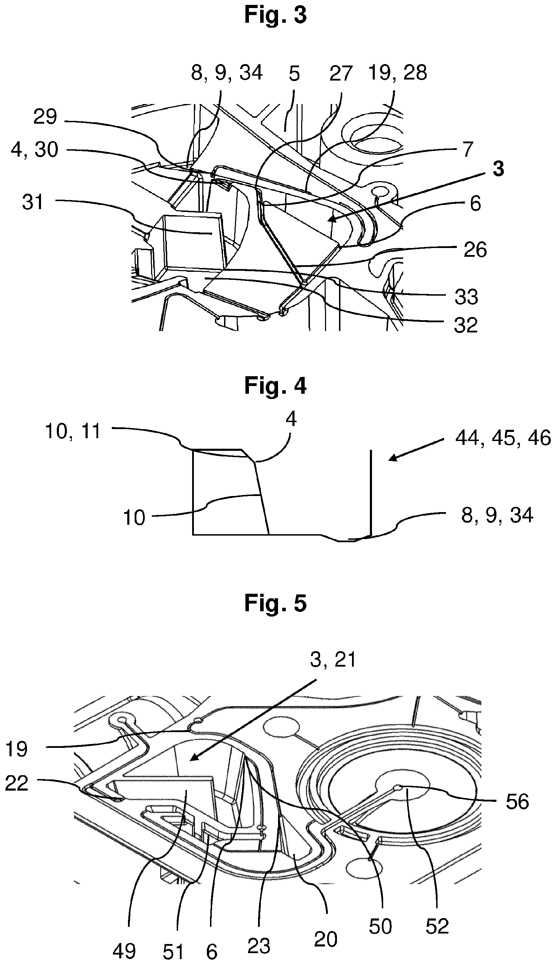

Im Nachfolgenden werden einzelne Ausführungen von Kammern 3, 20, 21, 32, 44, 45, 46 und Elementen des Probenträgers 1 beschrieben, die auf einem erfindungsgemäßen Probenträger 1, wie dem Probenträger 1 der Figur 1, ausgebildet sein können. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 2 gelten daher zu den Figuren 3 bis 8 und 11 bis 12 entsprechend.

Figur 3 zeigt eine Kammer 3, wobei die Kammer 3 zwei voneinander beabstandete Entlüftungsöffnungen 6, 7 hat, wobei die beiden Entlüftungsöffnungen 6, 7 so zueinander angeordnet sind, dass eine Verbindungslinie zwischen den Entlüftungsöffnungen 6, 7 nicht durch die Kammer 3 verläuft. Somit kann die Kammer 3 optimal befüllt und entlüftet werden.

Es ist ferner in Figur 3 zu sehen, dass beide Entlüftungsöffnungen 7 in einen Entlüftungskanal 26 übergehen, der in seinem Verlauf einen Richtungswechsel aufweist. Der Entlüftungskanal 26 ist in einem spitzen Winkel mit einem Entlüftungskanal 26 der Entlüftungsöffnung 6 zusammengeführt, sodass vorteilhaft Platz auf dem Fluidiksystem eingespart ist.

Zwischen Zulauföffnung 4 und den Entlüftungsöffnungen 6, 7 der Kammer 3 ist vorteilhaft eine Ecke 27 ausgebildet. Die Zulauföffnung 4 ist unterhalb der Entlüftungsöffnungen 6, 7 ausgebildet, sodass während einer Befüllung der Kammer 3 keine Flüssigkeit in die Entlüftungsöffnungen 6, 7 treten kann. Durch eine derartige Konstruktion kann eine stabile Entlüftung gewährleistet sein, sodass auch ein Druck in der Kammer 3 optimal für ein Analyseverfahren aufrechterhalten bzw. angepasst werden kann.

Zur optimalen Befüllung der Kammer 3 mit einer Umweltprobe und/oder einer anderen Flüssigkeit, insbesondere der zuvor genannte Ausgleichssubstanz, kann, wie in Figur 3 gezeigt, die Zulauföffnung 4 als Zulaufbereich 30 ausgebildet sein.

In dem hier dargestellten Ausführungsbeispiel befindet sich ferner die Überlauföffnung 28 oberhalb des Zulaufbereichs 4,30. Die Überlauföffnung 28 geht in einen Überlaufkanal 19, 28 über, welcher einen siphonartigen Verlauf hat, wodurch ein Rückfluss einer überlaufenden Flüssigkeit vorteilhaft verhindert werden kann. Der Überlaufkanal 19, 28 verbindet die Kammer 3 mit einer Abfallkammer 5 und/oder einer Haltekammer, sodass Flüssigkeit vorteilhaft entsorgt und/oder gehalten werden kann.

Kammer 3 ist vorteilhaft mit einer Vorkammer 32 verbunden (Figuren 1 und 3). Die Vorkammer 32 weist eine Gleitwand 33 mit zur Zulauföffnung 4 hin abnehmenden Neigung auf, sodass eine Umweltprobe und/oder eine andere Flüssigkeit, insbesondere die zuvor genannte Ausgleichssubstanz, schonend in die Kammer 3 überführt werden kann. Ferner weist die Vorkammer 32 eine Einbuchtung 31 auf, die in das Innere der Vorkammer 32 ragt.

Eine Kammer des Fluidiksystems 2, insbesondere die Kammer 3 aus den Figuren 1 und 3, ganz besonders die Kammern 32, 44, 45, 46 der Anordnung 14 (Figur 1) können eine Vertiefung 9 im Boden 8 aufweisen. Die Vertiefungen 8, 9 in Figur 1 sind optimal bei einem zentrifugierbaren Probenträger 1 gegenüber einer Zulauföffnung 4 angeordnet (siehe beispielsweise Kammer 46). Dabei kann in der Vertiefung 8, 9 vorteilhaft eine Umweltprobe und/oder einer andere Flüssigkeit, insbesondere die zuvor genannte Ausgleichssubstanz, insbesondere während eines Verfahrensschrittes gehalten werden (siehe Figur 3). Ferner kann in der Vertiefung 8, 9 eine für ein Verfahren wichtige getrocknete Substanz 34 vorgehalten sein (Figuren 3 und 4), die dann aktiviert wird, wenn beispielsweise eine Umweltprobe in die Vertiefung 8, 9 geführt wird. Durch die Vertiefung 8, 9 kann somit ein räumlich definierter Reaktionsraum geschaffen sein, wodurch Verfahrensschritte optimal ausgeführt werden können.

Die in Figur 1 dargestellten Kammern 44, 45 und 46 haben eine Wand 10 mit einem abragenden Vorsprung 11. Eine derartige Wand 10 mit einem abragenden Vorsprung 11 ist schematisch in Figur 4 dargestellt. Wie in Figur 4 zu sehen ist, ist an dem Vorsprung 11 eine Ablaufkante ausgebildet und die Zulauföffnung 4 ist zwischen einer Abtropfkante und einem Auftreffpunkt eines durch die Ablaufkante definierten Gießstrahl angeordnet. Der minimale Abstand der Vertiefung 8, 9 zu der Zulauföffnung 4 ist größer als der minimale Abstand der Vertiefung 8, 9 zu einem Fuß der Wand 10, wodurch eine Flüssigkeit besonders schonend in Richtung Vertiefung 8, 9 eingebracht werden kann.

Figur 5 zeigt eine Vorratskammer 21 eines erfindungsgemäßen Probenträgers 1, wobei eine Verbindungslinie zwischen der Einlauföffnung 22 der Vorratskammer 21 und der Auslauföffnung 23 der Dosierkammer 20 durch die Vorratskammer 21 verläuft.

In Figur 5 ist ferner zu sehen, dass das Volumen der Vorratskammer 21 wenigstens um einen Faktor fünf größer ist als das Volumen der Dosierkammer 20. Insbesondere durch diese unterschiedlichen Volumina ist eine Dosierung einzelner Kammern, insbesondere der Kammern 3, 32, 44, 45, 46, 63 wiederholt möglich. Durch die Einbuchtung 49 der Vorratskammer 21, welche in das Innere der Vorratskammer 21 ragt, und wobei eine Verbindungslinie zwischen der Einlauföffnung 22 der Vorratskammer 21 und einer Auslauföffnung 50 der Vorratskammer 21 durch die Einbuchtung 49 verläuft, ist gewährleistet, dass Flüssigkeit nicht über die Einlauföffnung 22 zurückfließen kann. Durch die Ausbildung der in den Figuren 1 und 5 gezeigten Ausführungsform einer Vorratskammer 21 und einer Dosierkammer 20 kann eine optimale Dosierung der der Dosierkammer 20 nachgeschalteten Elemente des Fluidiksystems 2 erreicht werden.

Die Dosierung wird ferner optimiert, da ein die Auslauföffnung 23 verlassender Fluidikkanal 19 einen siphonartigen Verlauf hat (siehe Figur 5).

Die Dosierung wird ferner optimiert, da zwischen der Vorratskammer 21 und der Dosierkammer 20 Belüftungsstrukturen 51 ausgebildet sind (siehe Figur 5). Somit kann eine Flüssigkeit, insbesondere die zuvor beschriebene Ausgleichssubstanz, blasenfrei in die die Dosierkammer 20 nachgeschalteten Elemente des Fluidiksystems 2 überführt werden. Durch eine Verminderung oder gar Vermeidung von Blasen können Analyseverfahren noch genauer realisiert werden.

Die zuvor erwähnte Ausgleichssubstanz zur Dosierung befindet sich in einem Reservoir 52, welches mit der Vorratskammer 21 verbunden ist. In Figur 5 ist zu sehen, dass eine Verbindungslinie zwischen der Einlauföffnung 22 der Vorratskammer 21 und einer Auslauföffnung 56 des Reservoirs 52 durch die Vorratskammer 21 verläuft. Durch diese Anordnung der Kammern 20, 21 und dem Reservoir 52 kann das Fluidiksystem besonders akkurat befüllt werden, ohne dass Flüssigkeit und/ oder eine Umweltprobe verloren geht, selbst wenn der Probenträger um 360° gedreht wird.

Wie in der Explosionsdarstellung der Figur 6 zu erkennen ist, ist das auf der unteren Seite 16 des Probenträgers 1 befindliche Reservoir 52 druckaktivierbar. Das in dieser Ausführungsform dargestellte Aktivierungselement 54 ist als Dorn 55 ausgebildet und zwischen einer Vertiefung 53 und dem Reservoir 52 positioniert.

Im Folgenden wird der auf der Unterseite 16 des Probenträgers 1 befindliche Messbereich 24 näher beschrieben (siehe Figuren 7 und 8). Der Messbereich 24 ist mit einem entfernbaren Abdeckelement 25 verschlossen (siehe Figur 8). Zumindest während einer Aufzeichnung kann das entfernbare Abdeckelement 25 vorteilhaft aus dem Messbereich 24 entfernt werden, sodass auch besonders schwache Messsignale aufgenommen werden können. So können beispielsweise fluoreszierende Mikroorganismen detektiert werden, welche durch ein Abdeckelement 25 nicht oder nur schlecht detektierbar wären. Somit können beispielsweise Mikroorganismen einer Umweltrobe analysiert und quantifiziert werden.

Vorteilhaft ist, wenn das Abdeckelement 25 transparent ausgebildet ist, wie es in dem Ausführungsbeispiel der Figur 8 der Fall ist. Somit können auch Analysen gemacht werden, welche ein Entfernen des Abdeckelements 25 nicht erfordern. Dadurch kann eine Umweltprobe besser und länger geschützt werden.

Das in Figur 8 gezeigte Abdeckelement 25 ist ferner als selbstklebende Abdeckfolie 57 ausgebildet und somit relativ leicht aus dem Messbereich 24 entfernbar. Insbesondere einfach kann eine Entfernung der Abdeckfolie 25, 57 erfolgen, wenn, wie in der Ausführungsform nach Figur 8 der Fall, die Abdeckfolie 25, 57 mit einem drehbaren Greifelement 62 verbunden ist. Somit kann durch eine Drehbewegung des Greifelements 62 die Abdeckfolie 25, 57 aus dem Messbereich 24 entfernt werden.

Der Messbereich 24 selbst kann zumindest teilweise durch einen vorzugsweise kraft- und/ oder formschlüssig an das Fluidiksystem 2 befestigbaren Deckel 58 ausgebildet sein (siehe Figur 7). Der Deckel 58 in Figur 7 ist fest auf das Fluidiksystem 2 gesteckt und bildet somit zusammen mit dem Fluidiksystem 2 den Messbereich 24 aus. Der Messbereich 24 ist über einen in Figur 1 gezeigten Verbindungskanal 18 mit auf der Oberseite 15 des Probenträgers 1 befindlichen Elementen des Fluidiksystems 2 verbunden.

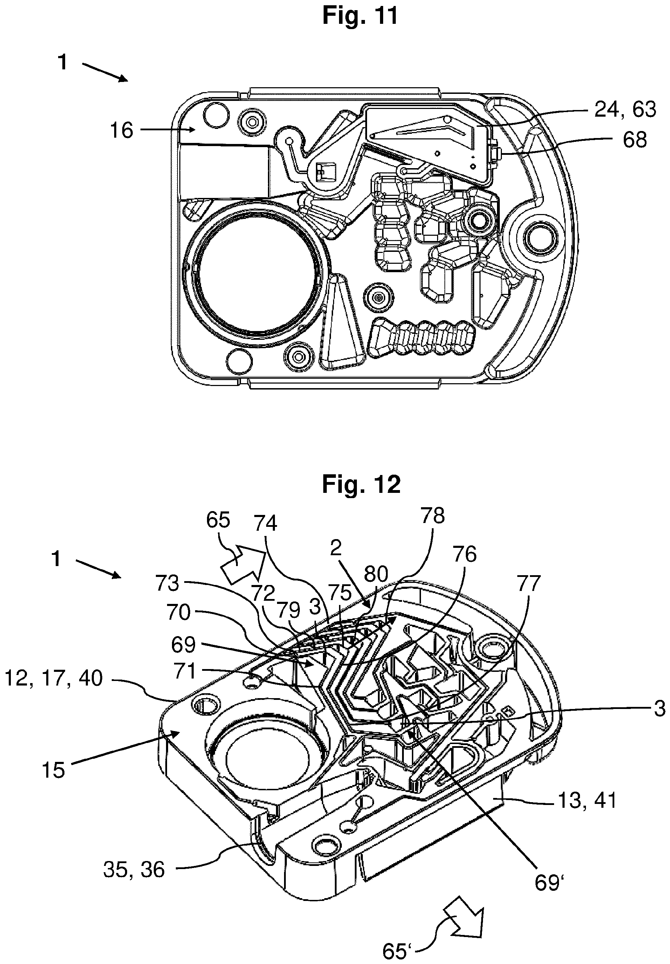

Alternativ kann sich der Messbereich 24, wie in Figur 11 gezeigt ist, auch in einer Messkammer 63 befinden, welche als separates Bauteil in den Probenträger 1 einklickbar bzw. einsteckbar ist. Dazu ist die Messkammer 63 auf der Unterseite 16 des Probenträgers 1 über einen Klickverschluss 68 mit dem Probenträger lösbar verbindbar. Dies bietet beispielsweise den Vorteil, dass die Messkammer 63 nach der Analyse separat entsorgt und/oder aufbewahrt werden kann. Auch wird durch eine lösbare Messkammer 63 beispielsweise ermöglicht, dass diese ausgetauscht werden kann oder je nach Bedarf unterschiedliche Messkammern 63 verwendet werden können.

Für optimale Analyseverfahren wird der Messbereich 24 über ein Entlüftungselement 59 entlüftet. Das Entlüftungselement 59 in der Ausführungsform nach Figur 7 ist vorteilhaft als Entlüftungsschnorchel 60 des Deckels 58 ausgebildet und ragt störungsfrei in das Innere des Probenträgers 1. Dabei weist der Entlüftungsschnorchel 60 Verdickungen 61 auf, welche zur Befestigung des Abdeckelements 25, 57 optimal ausgebildet sind (vergleiche Figur 8). Ferner ist somit das Entlüftungselement 59, 60 durch das Abdeckelement 25, 57 wenigstens vor der Messung verschlossen.

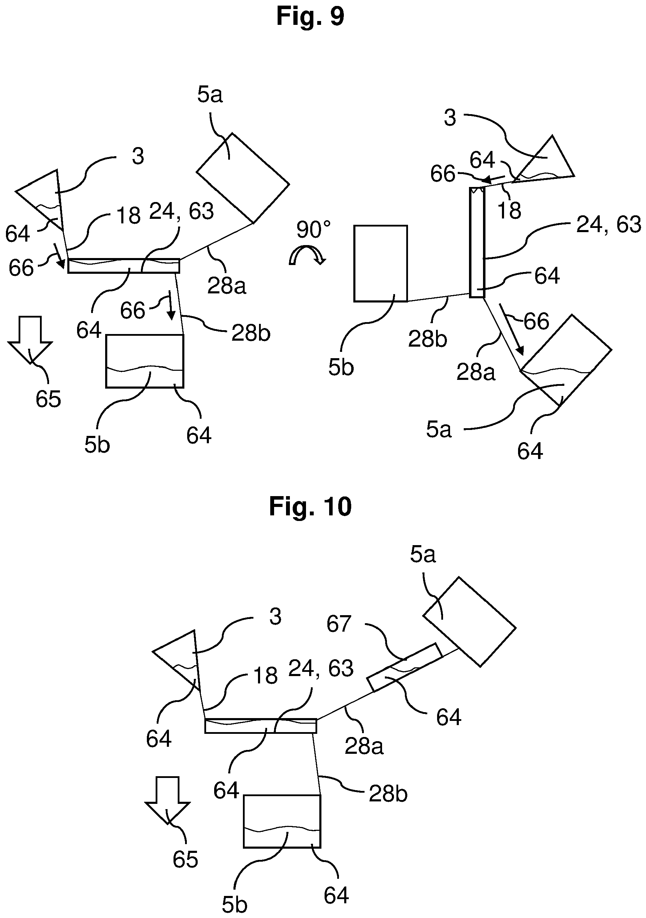

Figur 9 zeigt eine schematische Anordnung einer Messkammer 63 mit einem Messbereich 24 bei einem erfindungsgemäßen Probenträger 1, wobei die Messkammer 63 mit zwei Abfallkammern 5a, 5b fluidisch verbunden ist. Hierbei mündet der zu der ersten Abfallkammer 5a der wenigstens zwei Abfallkammern 5a, 5b führende Überlaufkanal 28a an einer Seite des Messbereichs 24, 63 als der Überlaufkanal 28b der zweiten Abfallkammer 5b der wenigstens zwei Abfallkammern 5a,b.

Somit kann, wie in Figur 9 dargestellt, der Probenträger 1 während der Zentrifugation entgegen seiner Zentrifugalkraft 65 um 90° geschwenkt werden. So befindet sich vor dem Schwenken (linke Seite) die Flüssigkeit 64 in der Kammer 3. Von da aus fließt die Flüssigkeit 64 über den Verbindungskanal 18 in die Messkammer 63 und von dort aus weiter in die Abfallkammer 5b. Der Strömungsweg 66 der Flüssigkeit 64 ist durch Pfeile in Figur 9 dargestellt. Dies ist insbesondere dadurch möglich, da die Abfallkammer 5a in einer Verarbeitungsrichtung, also der Richtung der Zentrifugalkraft 65, vor dem Messbereich 24 und Abfallkammer 5b in der Verarbeitungsrichtung hinter dem Messbereich 24 angeschlossen sind.

Nach dem Schwenken (rechte Seite der Figur 9), verändert sich der Strömungsweg 66 insofern, als dass die Flüssigkeit 64 nicht mehr in Abfallkammer 5b, sondern in Abfallkammer 5 a fließt. Somit kann der Messbereich 24, 63 sequentiell mit mehreren, vorzugsweise unterschiedlichen Flüssigkeiten 64 gespeist werden, ohne dass eine Vermischung der Flüssigkeiten 64 im Messbereich 24, 63 stattfindet. Ferner kann ein Rückstau im Messbereich 24, 63 verhindert werden. Somit können insbesondere Analysen bzw. Messungen von Proben verbessert werden.

Wie in Figur 9 zu sehen ist, sind Kammer 3 und die Abfallkammern 5a so angeordnet, dass vor dem Schwenken keine Flüssigkeit 64 von der Kammer 3 in die Abfallkammer 5a gelangen kann. Nach dem Schwenken (rechte Seite) bildet die Abfallkammer 5a den äußersten Punkt des Fluidiksystems 2. Diese Ausführung ist besonders bevorzugt, da vorteilhaft ein Rückstau in dem Messbereich 24, 63 verhindert werden kann.

Figur 10 zeigt eine schematische Anordnung eines erfindungsgemäßen Probenträgers 1, wobei die Messkammer 63 mit zwei Abfallkammern 5a, 5b fluidisch verbunden ist und wobei zwischen Messkammer 63 und Abfallkammer 5a eine Pufferkammer 67 angeordnet ist. Somit kann ein wie hierin beschriebener Querstrom ausgebildet werden, welcher vorteilhaft zu einer Querstromfiltration genutzt werden kann. Durch den Querstrom kann eine Verstopfung der Membran bzw. des Messbereichs 24, 63 verlangsamt oder gar verhindert werden. Ferner kann der Querstrom insbesondere dazu genutzt werden, Reaktionen auf der Membran zu beschleunigen, sodass Analysen von Proben verbessert werden können.

Figur 12 zeigt eine Ausführungsform eines erfindungsgemäßen Probenträgers 1, bei der zwei gestapelte Anordnungen 69, 69` von Kammern 3 zu sehen sind. Die gestapelten Anordnungen 69, 69' sind in jeweils unterschiedliche Richtungen einer Zentrifugalkraft 65, 65` ausgerichtet.

Wird der Probenträger 1 bei einer Zentrifugation so ausgerichtet, dass die Zentrifugalkraft 65 in Richtung der ersten gestapelten Anordnung 69 gerichtet ist, können die Kammern 3 der ersten gestapelten Anordnung 69 gleichmäßig befüllt werden. Wird daraufhin der Probenträger 1 gedreht und so ausgerichtet, dass die bei der Zentrifugation auftretende Zentrifugalkraft 65` in Richtung der zweiten gestapelten Anordnung 69` ausgerichtet ist, können die Kammern 3 der ersten gestapelten Anordnung 69 entleert und die Kammern 3 der zweiten gestapelten Anordnung 69` gleichzeitig befüllt werden. Durch solche gestapelte Anordnungen 69, 69` ist es möglich, dass die jeweiligen Kammern 3 gleichmäßig und/oder gleichzeitig befüllt und/oder entleert werden können.

Hierbei definiert die gestapelte Anordnung 69, 69` jeweils eine Stapelrichtung 78, die bei entsprechender Ausrichtung der Zentrifugalkraft 65 die Begriffe "oben" und "unten" bestimmt.

Hierbei hat die Kammer 3 der gestapelten Anordnung 69, 69` einen Zulauf 71 und einen Ablauf 70. Der Ablauf 70 bildet in Bezug auf die Stapelrichtung 78 (bei entsprechender Ausrichtung der Zentrifugalkraft 65) einen Überlauf 72 zu dem Zulauf 71. Dieser Überlauf 72 mündet in die nachfolgende Kammer 75 der gestapelten Anordnung 69. Flüssigkeit, die über den Zulauf 70 in die Kammer 3 fließt, wird, sobald die Kammer 3 gefüllt ist, in die nachfolgende Kammer 75 fließen und diese füllen usw. Hierbei weist der Ablauf 70 eine weitere Verzweigung 79 auf, die einerseits zur Kammer 75 und andererseits zur weiter nachfolgenden Kammer 80 führt. Sobald die Kammer 75 gefüllt ist, wirkt diese Verzweigung 79 als Überlauf, der in die Kammer 80 führt.

Somit teilt sich ein großes Flüssigkeitsvolumen in viele Teilvolumina auf.

Eine Verzweigung 73 zu einem Prozessierungsweg 74 ermöglicht es, alle Kammern 3 der gestapelten Anordnung 69 bei entsprechender Änderung der Richtung der Zentrifugalkraft 65 gemeinsam zu leeren.

Die Kammer 75 hat einen weiteren Ablauf 76, der in einen für diese Kammer 75 spezifischen Prozessierungsweg 77 mündet oder übergeht. Es ist somit durch Änderung der Ausrichtung der Zentrifugalkraft 65 erreichbar, das die Teilvolumina getrennt voneinander und/oder unterschiedlich prozessiert werden.

Somit schlägt die Erfindung vorzugsweise einen zentrifugierbaren Probenträger 1 mit einem Fluidiksystem 2 vor, wobei das Fluidiksystem wenigstens eine Kammer 3, 20, 21, 32, 44, 45, 46, 63 aufweist, die wenigstens eine Zulauföffnung 4 hat, wobei die Kammer 3, 20, 21, 32, 44, 45, 46, 63 wenigstens zwei voneinander beabstandete Entlüftungsöffnungen 6, 7 hat und wobei die Entlüftungsöffnungen 6, 7 so zueinander angeordnet sind, dass eine Verbindungslinie zwischen den Entlüftungsöffnungen 6, 7 nicht durch die Kammer 3, 20, 21, 32, 44, 45, 46, 63 verläuft. Ein derartiger erfindungsgemäßer Probenträger 1 ist besonders geeignet zur Verwendung bei Analyseverfahren zum Nachweis von Mikroorganismen, ist jedoch nicht auf diese Verwendung beschränkt.

### Bezugszeichenliste

- 1: zentrifugierbarer Probenträger
- 2: Fluidiksystem
- 3: Kammer
- 4: Zulauföffnung
- 5: Abfallkammer
- 6: Entlüftungsöffnung von 3
- 7: Entlüftungsöffnung von 3
- 8: Boden
- 9: Vertiefung
- 10: Wand
- 11: Vorsprung
- 12: Grundkörper
- 13: Befestigungsflügel
- 14: Anordnung von Kammern
- 15: Seite des Probenträgers
- 16: Seite des Probenträgers
- 17: Rand
- 18: Verbindungskanal
- 19: Fluidikkanal
- 20: Dosierkammer
- 21: Vorratskammer
- 22: Einlauföffnung von 21
- 23: Auslauföffnung von 20
- 24: Messbereich
- 25: entfernbares Abdeckelement
- 26: Entlüftungskanal
- 27: Ecke
- 28: Überlaufkanal
- 29: Überlauföffnung
- 30: Zulaufbereich
- 31: Einbuchtung
- 32: Vorkammer
- 33: Gleitwand von 32
- 34: getrocknete Substanz
- 35: Aufnahmebereich
- 36: Ausgang von 35
- 37: Abfluss von 35
- 38: Spülöffnung von 35
- 39: Kerbe
- 40: Wandung von 12
- 41: Rand von 12
- 42: Längsausdehnung von 1
- 43: Aussparung
- 44: Kammer von 14
- 45: Kammer von 14
- 46: Kammer von 14
- 47: Mittelpfosten
- 48: Verbindungsbereich
- 49: Einbuchtung von 21
- 50: Auslauföffnung von 21
- 51: Belüftungsstrukturen
- 52: Reservoir
- 53: Vertiefung
- 54: Aktivierungselement
- 55: Dorn
- 56: Auslauföffnung von 52
- 57: Abdeckfolie
- 58: Deckel
- 59: Entlüftungselement
- 60: Entlüftungsschnorchel
- 61: Verdickungen von 59
- 62: Greifelement
- 63: Messkammer
- 64: Flüssigkeit
- 65: Zentrifugalkraft
- 66: Strömungsweg von 64
- 67: Pufferkammer
- 68: Klickverschluss
- 69: gestapelte Anordnung von Kammern
- 70: Ablauf
- 71: Zulauf
- 72: Überlauf
- 73: Verzweigung
- 74: Prozessierungsweg
- 75: nachfolgende Kammer
- 76: weiterer Ablauf
- 77: spezifischer Prozessierungsweg
- 78: Stapelrichtung
- 79: Verzweigung
- 80: Kammer

## Patentansprüche

1. Zentrifugierbarer Probenträger (1) mit einem Fluidiksystem (2), die wenigstens eine Kammer (3, 20, 21, 32, 44, 45, 46, 63) aufweist, wobei die Kammer (3, 20, 21, 32, 44, 45, 46, 63) wenigstens eine Zulauföffnung (4) hat, **dadurch gekennzeichnet, dass** die Kammer (3, 20, 21, 32, 44, 45, 46, 63) wenigstens zwei voneinander beabstandete Entlüftungsöffnungen (6, 7) hat und dass die Entlüftungsöffnungen (6, 7) so zueinander angeordnet sind, dass eine Verbindungslinie zwischen den Entlüftungsöffnungen (6, 7) nicht durch die Kammer (3, 20, 21, 32, 44, 45, 46, 63) verläuft.

2. Zentrifugierbarer Probenträger (1), insbesondere nach Anspruch 1, mit einem Fluidiksystem (2), die wenigstens eine Kammer (3, 20, 21, 32, 44, 45, 46, 63) aufweist, wobei die Kammer (3, 20, 21, 32, 44, 45, 46, 63) wenigstens eine Zulauföffnung (4) hat, **dadurch gekennzeichnet, dass** die wenigstens eine Kammer (3, 20, 21, 32, 44, 45, 46, 63) einen Boden (8) hat, in dem eine Vertiefung (9) ausgebildet ist.

3. Zentrifugierbarer Probenträger (1), insbesondere nach einem der vorangehenden Ansprüche, mit einem Fluidiksystem (2), die wenigstens eine Kammer (3, 20, 21, 32, 44, 45, 46, 63) aufweist, wobei die Kammer (3, 20, 21, 32, 44, 45, 46, 63) wenigstens eine Zulauföffnung (4) hat, **dadurch gekennzeichnet, dass** eine Wand (10) der Kammer (3, 20, 21, 32, 44, 45, 46, 63) einen in die Kammer (3, 20, 21, 32, 44, 45, 46, 63) abragenden Vorsprung (11) ausbildet, dass an dem Vorsprung (11) eine Ablaufkante ausgebildet ist und dass die Zulauföffnung (4) zwischen einer Abtropfkante und einem Auftreffpunkt eines durch die Ablaufkante definierten Gießstrahl angeordnet ist.

4. Zentrifugierbarer Probenträger (1), insbesondere nach einem der vorhergehenden Ansprüche, mit einem Fluidiksystem (2), **wobei** der Probenträger (1) einen Grundkörper (12) aufweist, an dem das Fluidiksystem (2) nach einer Seite offen ausgebildet ist, insbesondere wobei der Grundkörper (12) wenigstens einen Befestigungsflügel (13) aufweist.

5. Zentrifugierbarer Probenträger (1), insbesondere nach einem der vorangehenden Ansprüche, mit einem Fluidiksystem (2), wobei das Fluidiksystem (2) wenigstens eine Anordnung (14) von Kammern (3, 20, 21, 32, 44, 45, 46, 63) aufweist, **dadurch gekennzeichnet, dass** jede Kammer (3, 20, 21, 32, 44, 45, 46, 63) der wenigstens einen Anordnung (14) zu wenigstens zwei weiteren Kammern (3, 20, 21, 32, 44, 45, 46, 63) der wenigstens einen Anordnung (14) benachbart ist.

6. Zentrifugierbarer Probenträger (1), insbesondere nach einem der vorangehenden Ansprüche, mit einem Fluidiksystem (2), wobei der Probenträger (1) zwei Seiten (15, 16) aufweist, die durch einen umlaufenden Rand (17) getrennt sind, wobei das Fluidiksystem (2) einen Verbindungskanal (18) umfasst, der die zwei Seiten (15, 16) verbindet, **dadurch gekennzeichnet, dass** der wenigstens eine Verbindungskanal (18) an seinen Enden in jeweils einen längs einer der zwei Seiten verlaufenden Fluidikkanäle (19) übergeht.

7. Zentrifugierbarer Probenträger (1), insbesondere nach einem der vorangehenden Ansprüche, mit einem Fluidiksystem (2), die wenigstens eine Dosierkammer (20) und eine Vorratskammer (21) aufweist, **dadurch gekennzeichnet, dass** eine Verbindungslinie zwischen einer Einlauföffnung (22) der Vorratskammer (21) und einer Auslauföffnung (23) der Dosierkammer (20) durch die Vorratskammer (21) verläuft.

8. Zentrifugierbarer Probenträger (1), insbesondere nach einem der vorangehenden Ansprüche, mit einem Fluidiksystem (2), die wenigstens einen Messbereich (24) aufweist, **dadurch gekennzeichnet, dass** der Messbereich (24) mit einem entfernbaren Abdeckelement (25) verschlossen ist.

9. Zentrifugierbarer Probenträger (1) nach einem der vorhergehenden Ansprüche, **dadurch gekennzeichnet, dass** sich der Messbereich (24) in einer Messkammer (63) befindet, und/oder dass der Messbereich (24) mit wenigstens zwei Abfallkammern (5, 5a, 5b) verbunden ist, insbesondere wobei eine der wenigstens zwei Abfallkammern (5, 5a, 5b), insbesondere in einer Verarbeitungsrichtung, vor dem oder einem Messbereich (24) und/oder eine der wenigstens zwei Abfallkammern (5, 5a, 5b), insbesondere in einer Verarbeitungsrichtung, hinter dem oder einem Messbereich (24) angeschlossen sind, und/oder dass der zu der ersten Abfallkammer (5) der wenigstens zwei Abfallkammern (5, 5a, 5b) führende Überlaufkanal (28, 28a, 28b) an einer Seite des Messbereichs (24) mündet als der Überlaufkanal (28, 28a, 28b) der zweiten Abfallkammer (5) der wenigstens zwei Abfallkammern (5) .

10. Zentrifugierbarer Probenträger (1) nach dem vorangehenden Anspruch, **dadurch gekennzeichnet, dass** die Messkammer (63) mit dem Probenträger (1) lösbar verbindbar ist.

11. Zentrifugierbarer Probenträger (1) nach einem der vorhergehenden Ansprüche, **dadurch gekennzeichnet, dass** zwischen wenigstens einer der wenigstens zwei Abfallkammern (5, 5a, 5b) in fluidischer Verbindung eine Pufferkammer (67) angeordnet ist und/oderdass wenigstens eine der Entlüftungsöffnungen (6, 7) in einen Entlüftungskanal (26) übergeht, der in seinem Verlauf vorzugsweise einen Richtungswechsel aufweist, und/oder dass zwischen wenigstens einer Entlüftungsöffnung (6, 7) und der Zulauföffnung (4) wenigstens eine Ecke (27) ausgebildet ist.

12. Zentrifugierbarer Probenträger (1) nach einem der vorhergehenden Ansprüche, **dadurch gekennzeichnet, dass** die wenigstens zwei Entlüftungsöffnungen (6, 7) zusammengeführt sind, insbesondere in einem spitzen Winkel, und/oder dass die Kammer (3) wenigstens eine in einen Überlaufkanal (28) übergehenden Überlauföffnung (29) hat, wobei die Überlauföffnung (28) vorzugsweise oberhalb der Zulauföffnung (4) positioniert ist, und/oder dass die Zulauföffnung (4) als Zulaufbereich (30) ausgebildet ist, insbesondere wobei sich die Überlauföffnung (29) oberhalb des Zulaufbereichs (30) befindet.

13. Zentrifugierbarer Probenträger (1) nach einem der vorhergehenden Ansprüche, **dadurch gekennzeichnet, dass** wenigstens ein mit der oder einer Kammer (3) verbundener Fluidikkanal (19) einen siphonartigen Verlauf hat und/oder dass die (3) oder eine Kammer wenigstens eine Einbuchtung (31) hat, die in das Innere der Kammer (3) ragt, wobei die wenigstens eine Zulauföffnung (4) und/oder die wenigstens eine Entlüftungsöffnung (6, 7) vorzugsweise zwischen der Einbuchtung (31) und einer Zentrifugalachse positionierbar ist, und/oder dass die Kammer (3) über die Zulauföffnung (4) mit einer Vorkammer (32) verbunden ist, wobei die Vorkammer (32) vorzugsweise eine Gleitwand (33) mit zur Zulauföffnung (4) hin abnehmenden Neigung aufweist.

14. Zentrifugierbarer Probenträger (1) nach einem der vorhergehenden Ansprüche, **dadurch gekennzeichnet, dass** die Vertiefung (9) gegenüber einer Zulauföffnung (4) angeordnet und/oder dass die Vertiefung (9) in der von einer Wand (10) definierten Kammer (3) derart angeordnet ist, dass ein minimaler Abstand der Vertiefung (9) zu der Zulauföffnung (4) größer als ein minimaler Abstand der Vertiefung (9) zu der Wand (10) beträgt, und/oder dass die Vertiefung (9) mit einer vorzugsweise getrockneten Substanz (34) gefüllt ist und/oder dass die Zulauföffnung (4) an einem freien Ende des Vorsprungs (11) angeordnet ist oder dass die Zulauföffnung (4) in einer Nachbarschaft eines Fußes des Vorsprungs (11) angeordnet ist.

15. Zentrifugierbarer Probenträger (1) nach einem der vorhergehenden Ansprüche, **dadurch gekennzeichnet, dass** die offene Seite als Aufnahmebereich (35) für ein Probennahmeinstrument ausgebildet ist, insbesondere wobei zwischen einem Ausgang (36) des Aufnahmebereichs (35) und einem Abfluss (37) des Aufnahmebereichs (35) beabstandet eine Spülöffnung (38) positioniert ist, und/oder dass der Aufnahmebereich (35) eine Kerbe (39) aufweist und/oder dass der Grundkörper (12) eine Wandung (40) aufweist, welche das Fluidiksystem (2) begrenzt, insbesondere wobei eine Wandstärke der Wandung (40) höchstens ein Zehntel einer Dicke des Probenträgers (1) beträgt und/ oder wobei die Wandstärke zwischen zwei Punkten der Wandung (40) maximal um eine Faktor zwei variiert.

16. Zentrifugierbarer Probenträger (1) nach einem der vorhergehenden Ansprüche, **dadurch gekennzeichnet, dass** der Befestigungsflügel (13) durch die Wandung (40), insbesondere an einem Rand (41), des Grundkörpers (12) ausgebildet ist, und/oder dass sich der wenigstens eine Befestigungsflügel (13) mindestens über eine Hälfte einer Längsausdehnung (42) des Probenträgers (1) erstreckt und/oder dass der wenigstens eine Befestigungsflügel (13) von wenigstens einer Aussparung (43) begrenzt ist und/oder dass die Kammern der Anordnung (14) sternförmig oder vermascht angeordnet sind.

17. Zentrifugierbarer Probenträger (1) nach einem der vorhergehenden Ansprüche, **dadurch gekennzeichnet, dass** das Fluidiksystem (2) wenigstens eine in einer Richtung, vorzugsweise in Richtung einer Zentrifugalkraft (65), gestapelte Anordnung (69) von Kammern (3) aufweist, insbesondere wobei wenigstens eine Kammer (3) der gestapelten Anordnung (69, 69') in der Fluidik einen Ablauf (70) aufweist, der in Bezug auf einen Zulauf (71) dieser Kammer (3) in der Stapelrichtung (78) einen Überlauf (72) bildet und/oder der in die in Stapelrichtung (78) nachfolgende Kammer (75) mündet und/oder der eine Verzweigung (73) zu der nachfolgenden Kammer (75) und einem weiteren Prozessierungsweg (74) oder einer weiter nachfolgenden Kammer (80) aufweist und/oder wobei die nachfolgende Kammer (75) einen weiteren, vorzugsweise in einer von der Stapelrichtung (78) abweichenden Orientierung verwendbaren weiteren Ablauf (76) aufweist, der in einen spezifischen Prozessierungsweg (77) mündet oder übergeht.

18. Zentrifugierbarer Probenträger (1) nach einem der vorhergehenden Ansprüche, **dadurch gekennzeichnet, dass** wenigstens eine Wand einer Kammer der Anordnung (14) konkav gewölbt ist, insbesondere wobei jede Kammer der Anordnung (14) wenigstens eine konkave gewölbte Wand aufweist, und/oder dass jede Kammer der Anordnung (14) mit wenigstens einer anderen Kammer der Anordnung (14) durch wenigstens einen Fluidikkanal (19) verbunden ist und/oder dass die Anordnung (14) wenigstens einen Mittelpfosten (47) aufweist, wobei der Mittelpfosten (47) wenigstens eine Wandung einer ersten und einer zweiten Kammer der Anordnung (14) ausbildet, insbesondere wobei die wenigstens zwei Kammern durch einen am Mittelpfosten (47) ausgebildeten Fluidikkanal (19) verbunden sind.

19. Zentrifugierbarer Probenträger (1) nach einem der vorhergehenden Ansprüche, **dadurch gekennzeichnet, dass** wenigstens drei Kammern der wenigstens einen Anordnung (14) in einem gemeinsamen Verbindungsbereich (48) münden und/oder dass jede Kammer der wenigstens einen Anordnung (14) mit einem Messbereich (24) verbunden ist und/oder dass die wenigstens eine Anordnung (14) mit wenigstens einer weiteren Anordnung an Kammern und/oder wenigstens einer weiteren Kammer verbunden ist.

20. Zentrifugierbarer Probenträger nach einem der vorhergehenden Ansprüche, **dadurch gekennzeichnet, dass** ein Volumen der Vorratskammer (21) wenigstens um einen Faktor zwei, insbesondere um einen Faktor fünf, größer ist als ein Volumen der Dosierkammer (20), und/oder dass ein die Auslauföffnung (23) verlassender Fluidikkanal (19) einen siphonartigen Verlauf hat und/oder dass die Vorratskammer (21) eine Einbuchtung (49) hat, die in das Innere der Vorratskammer (21) ragt, insbesondere wobei eine Verbindungslinie zwischen der Einlauföffnung (22) der Vorratskammer (21) und einer Auslauföffnung (50) der Vorratskammer (21) durch die Einbuchtung (49) verläuft.

21. Zentrifugierbarer Probenträger (1) nach einem der vorhergehenden Ansprüche, **dadurch gekennzeichnet, dass** zwischen der Vorratskammer (21) und der Dosierkammer (20) Belüftungsstrukturen (51) ausgebildet sind und/oder dass die Vorratskammer (21) mit einem eine Ausgleichssubstanz enthaltenen Reservoir (52) verbunden ist, insbesondere wobei das Reservoir (52) als eine druckaktivierbare Ausflussvorrichtung ausgebildet ist, und/oder dass zwischen einer Vertiefung (53) und dem Reservoir (52) ein Aktivierungselement (54), insbesondere ein Dorn (55), zur Druckaktivierung des Reservoirs (52) ausgebildet ist.

22. Zentrifugierbarer Probenträger (1) nach einem der vorhergehenden Ansprüche, **dadurch gekennzeichnet, dass** eine Verbindungslinie zwischen der Einlauföffnung (22) der Vorratskammer (21) und einer Auslauföffnung (56) des Reservoirs (52) durch die Vorratskammer (21) verläuft und/oder dass eine Verbindungslinie zwischen Vorratskammer (21) und Reservoir (52) durch die Dosierkammer (20) verläuft und/oder dass das Abdeckelement (25) transparent, vorzugsweise als selbstklebenden Abdeckfolie (57), ausgebildet ist.

23. Zentrifugierbarer Probenträger (1) nach einem der vorhergehenden Ansprüche, **dadurch gekennzeichnet, dass** der Messbereich (24) zumindest teilweise durch einen vorzugsweise kraft- und/ oder formschlüssig an das Fluidiksystem (2) befestigbaren Deckel (58) ausgebildet ist und/oder dass der Deckel (58) ein Entlüftungselement (59), vorzugsweise einen Entlüftungsschnorchel (60), aufweist, insbesondere wobei das Entlüftungselement (59) Verdickungen (61) an einem Rand aufweist, und/oder dass das Abdeckelement (25) wenigstens vor der Messung das Entlüftungselement (59) verschließt.

24. Zentrifugierbarer Probenträger (1) nach einem der vorhergehenden Ansprüche, **dadurch gekennzeichnet, dass** das Abdeckelement (25) mit einem vorzugsweise drehbaren Greifelement (62) verbunden ist.
